(19) Europäisches Patentamt / European Patent Office / Office européen des brevets

(11) **EP 3 050 933 B1**

(12) **EUROPEAN PATENT SPECIFICATION**

(45) Date of publication and mention of the grant of the patent:
**14.08.2019 Bulletin 2019/33**

(21) Application number: **14846997.6**

(22) Date of filing: **24.09.2014**

(51) Int Cl.:
*C09D 127/12* *(2006.01)*    *C09D 127/16* *(2006.01)*
*C09D 133/00* *(2006.01)*    *C09D 163/00* *(2006.01)*
*C09D 167/00* *(2006.01)*    *C09D 175/04* *(2006.01)*
*C09D 183/04* *(2006.01)*    *C08K 5/00* *(2006.01)*
*C08K 5/42* *(2006.01)*

(86) International application number:
**PCT/JP2014/075311**

(87) International publication number:
**WO 2015/046262 (02.04.2015 Gazette 2015/13)**

(54) **POWDERY COATING MATERIAL AND COATED ARTICLE**

PULVERFÖRMIGES BESCHICHTUNGSMATERIAL UND BESCHICHTETER ARTIKEL

MATÉRIAU DE REVÊTEMENT PULVÉRULENT ET ARTICLE REVÊTU

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **27.09.2013 JP 2013202589**

(43) Date of publication of application:
**03.08.2016 Bulletin 2016/31**

(73) Proprietor: **AGC Inc.**
**Tokyo 100-8405 (JP)**

(72) Inventors:
• **SAITO, Shun**
  **Tokyo 100-8405 (JP)**
• **AIKAWA, Masataka**
  **Tokyo 100-8405 (JP)**

(74) Representative: **Müller-Boré & Partner**
**Patentanwälte PartG mbB**
**Friedenheimer Brücke 21**
**80639 München (DE)**

(56) References cited:
EP-A2- 1 679 352       JP-A- H0 931 395
JP-A- 2000 154 219     JP-A- 2000 154 219
JP-A- 2003 048 908     JP-A- 2003 096 381
JP-A- 2003 096 381     JP-A- 2006 188 702
JP-A- 2010 116 442     JP-A- 2012 040 503
JP-A- 2013 094 777     JP-B2- 2 871 948
US-A1- 2013 115 380    US-A1- 2013 116 369

**Description**

The present invention relates to a powder coating material and a coated article.

In recent years, global scale environmental destruction problems such as global warming, ozone layer depletion and acid rain have gained prominent attention. Internationally, environmental pollution measures are advocated, and various regulations have been established from the viewpoint of environmental protection. Among them, release into the atmosphere of organic solvents (VOC) has been a serious problem, and also in each industry, the movement for de-organic solvents (de-VOC) along with the trend for strengthening VOC regulations has become active. Also in the paint industry, as a substitute for conventional organic solvent-based coating material, a powder coating material is highly expected as a coating material which contains no VOC and which is friendly to the environment as it can be recovered and reused without requiring exhaust treatment or wastewater treatment.

As such a powder coating material, an acrylic resin powder coating material, a polyester resin powder coating material or an epoxy resin powder coating material, is mainly used. However, coating films formed by using these powder coating materials have such a drawback that they are poor in acid resistance or weather resistance.

As a powder coating material to overcome such a drawback, a fluororesin type powder coating material using a fluororesin has been developed.

Further, a hybrid powder coating material has been proposed, wherein a powder containing a polyester resin and a powder containing a fluororesin are dry-blended (see e.g. Patent Documents 1 to 3).

Using such a hybrid powder coating material, it is possible to form, by one coating, a cured film having a double-layered structure comprising a cured resin layer made of the thermosetting polyester resin on the substrate side and a fluororesin layer on the air side. Such a cured film is excellent in weather resistance, since it has a fluororesin layer on the air side.

Meanwhile, in recent years, rain streak stain of outdoor buildings has been problematic, especially in urban areas. As powder coating materials capable of forming coating films excellent in stain resistance, for example, the following powder coatings have been proposed.

(1) A powder coating material composed of a composition having an organic silicate compound blended as an anti-staining agent to an acrylic resin, a polyester resin or an epoxy resin (Patent Documents 4 to 7).
(2) A powder coating material composed of a composition having a specific alkyl silicate mixture blended as an anti-staining agent to a fluororesin (Patent Document 8)

Patent Document 9 provides a polyphenylene sulfide resin powder-coating composition.

Patent Document 1: JP-A-2010-221113
Patent Document 2: JP-A-2012-040503
Patent Document 3: WO 2012/048650
Patent Document 4: JP-A-2002-294170
Patent Document 5: JP-A-2005-126512
Patent Document 6: JP-A-2005-126513
Patent Document 7: JP-A-2005-272499
Patent Document 8: JP-A-2008-266361
Patent Document 9: JP 2 871948 B2

However, according to the findings of the present inventors, the powder coating material of (1) has the following problems.

(i) The coating film is inferior in acid resistance or weather resistance.
(ii) The coating film formed by melting the powder coating material, has a high melt viscosity, whereby it is difficult for the organic silicate compound to migrate to the surface layer of the coating film. Therefore, it is not possible to sufficiently cover the surface of the coating film with the organic silicate compound, and the water contact angle of the coating film is about 56 to 65°, whereby the stain resistance is insufficient.

Also, the powder coating material of (2) has the above problem (ii).

It is an object of the present invention to provide a powder coating material capable of forming a coating film excellent in acid resistance, weather resistance and stain resistance, and a coated article having, on its surface, a coating film excellent in acid resistance, weather resistance and stain resistance.

The present invention provides a powder coating material and a coated article, having the following constructions [1] to [15].

[1] A powder coating material composed of a powder of a composition comprising a fluororesin and at least one anti-staining agent selected from the following salt:

Salt: a sodium dialkyl sulfosuccinate or sodium alkyl benzene sulfonate.

[2] The powder coating material according to [1], wherein the composition further contains a resin other than the fluororesin.

[3] A powder coating material which is a powder mixture comprising a first powder composed of a first composition containing the fluororesin, and a second powder composed of a second composition containing a resin other than the fluororesin and not containing the fluororesin, wherein at least one of the first composition and the second composition contains at least one anti-staining agent selected from the following salt:

Salt: a sodium dialkyl sulfosuccinate or sodium alkyl benzene sulfonate.

[4] The powder coating material according to [2] or [3], wherein the content of the resin other than the fluororesin is from 10 to 90 parts by mass, per 100 parts by mass of the total of the fluororesin and the resin other than the fluororesin.

[5] The powder coating material according to any one of [2] to [4], wherein the resin other than the fluororesin is a curable acrylic resin, a curable polyester resin, a curable urethane resin, a curable epoxy resin or a curable silicone resin.

[6] The powder coating material according to any one of [2] to [5], wherein the resin other than the fluororesin is a curable polyester resin having at least one type of reactive groups selected from hydroxy groups and carboxy groups.

[7] The powder coating material according to any one of [2] to [6], wherein the ratio (Mw/Mn) of the mass average molecular weight (Mw) to the number average molecular weight (Mn), of the resin other than the fluororesin is within a range of from 1.0 to 3.0.

[8] The powder coating material according to any one of [1] to [7], wherein the fluororesin is a hydroxy group-containing fluorinated polymer or a carboxy group-containing fluorinated polymer.

[9] The powder coating material according to any one of [5] to [8], which further contains a curing agent.

[10] The powder coating material according to any one of [2] to [4], wherein the fluororesin is a polyvinylidene fluoride, and the resin other than the fluororesin is an acrylic resin.

[11] The powder coating material according to [10], wherein the ratio (Mw/Mn) of the mass average molecular weight (Mw) to the number average molecular weight (Mn), of the acrylic resin is within a range of from 1.0 to 3.0.

[12] The powder coating material according to any one of [1] to [11], wherein the content of the anti-staining agent is from 0.01 to 15 parts by mass, per 100 parts by mass of the resin components contained in the powder coating material.

[13] A coated article having, on the surface of a substrate, a coating film formed from the powder coating material as defined in any one of [1] to [12].

[14] The coated article according to [13], wherein the water contact angle of the coating film is from 1 to 55°, wherein the contact angle when a droplet of water was dropped on the coating film in air, was measured by means of a contact angle meter (manufactured by Kyowa Interface Science Co., Ltd., CA-X type).

[15] The coated article according to [13] or [14], wherein the material for the substrate is aluminum.

According to the powder coating material of the present invention, it is possible to form a coating film excellent in acid resistance, weather resistance and stain resistance.

The coated article of the present invention has, on its surface, a coating film excellent in acid resistance, weather resistance and stain resistance.

The following definitions of terms apply throughout this specification and claims.

The "glass transition temperature" means the intermediate point glass transition temperature measured by a differential scanning calorimetry (DSC) method.

The "fluorinated polymer" means a polymer compound having fluorine atoms in the molecule.

The "fluororesin" means a fluorinated polymer, or a cured product or crosslinked product of a fluorinated polymer formed by a reaction of a reactive group-containing fluorinated polymer.

The "non-fluororesin" means a curable or non-curable resin other than a fluororesin, and, in the case of a curable resin, further means a cured product or crosslinked product thereof.

The "resin component" means a component consisting of a resin such as a fluororesin or non-fluororesin contained in e.g. a composition.

The "thermosetting resin" means a resin which is curable to have a network structure when heated in the presence or absence of a curing agent.

The "fluorinated surfactant" means a compound having fluorine atoms in a hydrophobic portion (an alkyl chain), among compounds (so-called surfactants) having a hydrophilic portion and a hydrophobic (lipophilic) portion in their molecules.

The "organic sulfonic acid ion" means an anion having a proton dissociated from an organic compound having a sulfo group ($-SO_3H$), and includes an anion having a proton dissociated from a sulfuric acid ester having a sulfuric

acid ester group ($-OSO_3H$).

The "organic carboxylic acid ion" means an anion having a proton dissociated from an organic compound having a carboxy group (-COOH).

The "organic phosphate ion" means an anion having a proton dissociated from a phosphoric acid monoester or phosphoric acid diester, among phosphoric acid esters having hydrogen in orthophosphate substituted by an organic group.

The "amphoteric metal ion" means a cation of an element having properties of metal and non-metal. The amphoteric metal may, for example, be aluminum or zinc.

The "organic ammonium ion" means a cation having from 1 to 3 hydrogen atoms in an ammonium ion ($NH_4^+$) substituted by organic groups.

The "dry blending" means mixing at least two types of powders without melting the powders and without addition of a solvent.

The "coating film" means a film of a melt of a powder coating material formed by applying the powder coating material, or a film formed by curing or solidification of such a film of a melt.

The "cured film" means a coating film formed by reacting and curing the above-mentioned film of a melt of a powder coating material.

The "one coating" means coating only once.

The "powder coating material is melted and cured" means that a powder coating material is made into a molten state, and reactive components therein are reacted for curing.

The "(meth) acrylate" is a generic term for an acrylate and a methacrylate.

The "unit" means a moiety derived from a monomer, which is present in a polymer to constitute the polymer. A unit derived from a monomer having a carbon-carbon unsaturated double bond and formed by addition polymerization of the monomer, is a divalent unit formed by cleavage of the unsaturated double bond. A unit derived from a polyvalent carboxylic acid compound and constituting a polyester resin, is a monovalent or higher valent unit formed by removing a hydroxy group from at least one carboxy group in the polyvalent carboxylic acid compound, and a unit derived from a polyhydric alcohol compound is a monovalent or higher valent unit formed by removing a hydrogen atom from at least one hydroxy group in the polyhydric alcohol compound. Further, one having a structure of a certain unit chemically converted after formation of a polymer, may also be called a unit.

Hereinafter, as the case requires, units derived from an individual monomer may be called by a name having "units" attached to the monomer name.

The "fluororesin" may be hereinafter referred to also as a "fluororesin (A1)".

The "resin other than a fluororesin" may be hereinafter referred to also as a "resin (A2)".

The "anti-staining agent" as specified in Claims, may be hereinafter referred to also as an "anti-staining agent (B)." Further, hereinafter, a fluorinated surfactant may be referred to also as an "anti-staining agent (B1)", and the salt as specified in Claims may be referred to also an "anti-staining agent (B2)".

The "composition comprising a fluororesin and an anti-staining agent (B)" may be hereinafter referred to also as a "composition (X1)", and the "powder composed of a composition (X1)" may be hereinafter referred to also as a "powder (X1)".

The "first composition containing a fluororesin" as specified in Claims may be hereinafter referred to also as a "composition (X2)", and the "first powder composed of a composition (X2)" may be hereinafter referred to also as a "powder (X2)".

The "second composition containing a resin other than a fluororesin and not containing a fluororesin" as specified in Claims may be hereinafter referred to also as a "composition (Y)", and the "second powder composed of a composition (Y)" may be hereinafter referred to also as a "powder (Y) ".

[Powder coating material]

The powder coating material of the present invention is characterized in that it is composed of a powder of a composition (X1) comprising a fluororesin (A1) and an anti-staining agent (B). The powder coating material of the present invention may further contain, in addition to the above two components, components other than the above two components, such as a resin (A2). When the powder coating material of the present invention contains a resin (A2), the powder coating material of the present invention is divided into the following two embodiments.

Powder coating material (I): A powder coating material composed of a powder (X1) constituted by collected powder particles, wherein a fluororesin (A1), an anti-staining agent (B) and a resin (A2) are contained substantially in each one of the powder particles.

Powder coating material (II): A powder coating material composed of a powder mixture comprising a powder (X2) constituted by collected powder particles containing a fluororesin (A1), and a powder (Y) constituted by collected powder particles containing a resin (A2) and not containing a fluororesin (A1). The anti-staining agent (B) may be contained in either one of the powder (X2) and the powder (Y), or may be contained in both of them.

The powder coating material of the present invention may contain components other than the three components of the fluororesin (A1), the resin (A2) and the anti-staining agent (B). The components other than the above three components may, for example, be a pigment, a curing agent, a curing catalyst, a ultraviolet absorber, and a light stabilizer. In the powder coating material (II), components other than the above three components, may be contained in either one of the powder (X2) and the powder (Y) or may be contained in both of them, like the anti-staining agent (B).

In a case where the resin (A2) is a resin having low compatibility with a fluororesin (A1), such as a curable polyester resin, each of a coating film formed from the powder coating material (I) containing the resin (A2) and a coating film formed from the powder coating material (II) tends to undergo layer-separation in a molten state, to form a coating film having a double layered structure comprising a non-fluororesin layer on the substrate side and a fluororesin layer on the air side. In a case where the powder coating material (I) does not contain a resin having low compatibility with a fluororesin (A1), such as a curable polyester resin, a coating film having a single layer structure made solely of a fluororesin layer will be formed.

Further, if the constituting components and their contents in the powder coating material (I) and the powder coating material (II) are the same, substantially the same coating film will be formed from such powder coating materials. However, in the case of a powder coating material to form a double-layered structure, the powder coating material (II) is better in that a coating film having a double-layered structure with better layer separation is thereby obtainable.

[Composition for powder coating material]

The composition (X1) in the present invention is a composition for a powder coating material comprising a fluororesin (A1) and the following salt (B2).

Salt (B2): sodium dialkyl sulfosuccinate or sodium alkyl benzene sulfonate.

The composition (X1) may contain, as the case requires, a resin (A2), a pigment (hereinafter referred to also as a pigment (C)), a curing agent (hereinafter referred to also as a curing agent (D)), a curing catalyst (hereinafter referred to also as a curing catalyst (E)), a ultraviolet absorber, a light stabilizer, other components (hereinafter these components such as a ultraviolet absorber may be collectively referred to as a component (F)).

By using the composition (X1), it is possible to produce a powder (X1) as described later. The powder (X1) may be used as a powder coating material (I) as it is, as described later, or may be used as a powder coating material by mixing the powder (X1) with other components (other powders).

Here, the composition to constitute a powder for a powder coating material is considered to be substantially identical with a composition to constitute a mixture of raw materials for a powder coating material, before powdering, or a melt of such a mixture, unless there are components that are lost by evaporation in the melting process of the raw material mixture, in the process of cooling of the melt, and powdering, or components that are changed by decomposition.

(Fluororesin (A1))

The fluororesin (A1) is made of a fluorinated polymer, and it is preferred that the fluorinated polymer is a fluoroolefin polymer. The fluorinated polymer is a polymer having reactive groups or a polymer having no reactive groups, and either fluoropolymer is thermofusible.

In the application of the powder coating material containing a fluorinated polymer having no reactive groups, a coating film of a melt is formed from the powder coating material, and then the coating film is cooled to become a solid film.

In the application of the powder coating material containing a fluorinated polymer having reactive groups, a coating film of a melt is formed from the powder coating material, and the reactive groups are reacted in the coating film of the melt so that the fluorinated polymer is cured, and it is then cooled whereby the coating film of the melt becomes a solid film.

The fluorinated polymer may be a fluoroolefin polymer, i.e. a homopolymer or copolymer of a fluoroolefin. The copolymer may, for example, be a copolymer of at least two types of fluoroolefins, a copolymer of at least one fluoroolefin and at least one fluorinated monomer other than a fluoroolefin, a copolymer of at least one fluoroolefin and at least one monomer having no fluorine atom or a copolymer of at least one fluoroolefin, at least one fluorinated monomer other than a fluoroolefin and at least one monomer having no fluorine atom.

The monomer copolymerizable with a fluoroolefin is preferably a compound having a carbon-carbon double bond other than a fluoroolefin. The monomer having a carbon-carbon double bond is excellent in alternating copolymerizability with a fluoroolefin, whereby the polymerization yield can be made high. Further, even when remained unreacted, it presents little influence to the coating film and can be easily removed in the production process.

A fluoroolefin is a compound having one or more hydrogen atoms in a hydrocarbon olefin (general formula: $C_nH_{2n}$) substituted by fluorine atoms.

The number of carbon atoms in the fluoroolefin i.e. n, is preferably from 2 to 8, particularly preferably from 2 to 6.

The number of fluorine atoms in the fluoroolefin is at least 2, particularly preferably 3 or 4. When the number of fluorine atoms is at least 2, the coating film will be excellent in weather resistance. In the fluoroolefin, at least one hydrogen atom not substituted by a fluorine atom may be substituted by a chlorine atom. When the fluoroolefin has a chlorine atom, it will be easy to disperse a pigment (C) (particularly a colored organic pigment such as cyanine blue or cyanine green) in the fluororesin (A1). Further, the glass transition temperature of the fluororesin (A1) can be designed to be at least 30°C, and it is possible to suppress blocking of the coating film.

The fluoroolefin is preferably tetrafluoroethylene (hereinafter referred to also as "TFE"), chlorotrifluoroethylene (hereinafter referred to also as "CTFE"), hexafluoropropylene, vinylidene fluoride or vinyl fluoride, particularly preferably TFE or CTFE.

As the fluoroolefin, one type may be used alone, or two or more types may be used in combination.

As the fluoroolefin units, units formed directly by polymerization of a fluoroolefin are preferred.

The fluorinated monomer other than a fluoroolefin may be a monomer having fluorine atoms, such as a fluoroalkyl (alkyl vinyl ether) or a perfluoro (alkyl vinyl ether). The monomer having fluorine atoms may have a reactive group.

The monomer having no fluorine atom may be a monomer having no reactive group, or a monomer having a reactive group. The monomer having no reactive group may, for example, be an olefin or a vinyl ether having no reactive group, and the monomer having a reactive group may, for example, be a monomer having a hydroxy group or a vinyl monomer.

The fluorinated polymer having no reactive group may, for example, be a TFE-perfluoro(alkyl vinyl ether) copolymer (hereinafter referred to also as "PFA"), a TFE-hexafluoropropylene copolymer, a TFE-perfluoro(alkyl vinyl ether)-hexafluoropropylene copolymer, an ethylene-TFE copolymer (hereinafter referred to also as "ETFE"), polyvinylidene fluoride (hereinafter referred to also as "PVDF"), polyvinyl fluoride, polychlorotrifluoroethylene or an ethylene-CTFE copolymer.

The fluorinated polymer having no reactive group may further have, as the case requires, units derived from other monomers within a range not to impair the essential properties thereof.

Other monomers are monomers other than the monomers forming the essential units as units constituting the fluorinated polymer (e.g. ethylene and TFE in ETFE, TFE and a perfluoro(alkyl vinyl ether) in PFA).

As such other monomer, vinylidene fluoride is particularly preferred from such a viewpoint that the obtainable fluorinated polymer will be excellent in adhesion to a substrate (particularly an aluminum substrate), and fixing of an aluminum curtain wall with a sealing agent will be easy.

The melting point of the fluorinated polymer having no reactive group is preferably at most 300°C, more preferably at most 200°C, particularly preferably at most 180°C. When the melting point of the fluorinated polymer is at most the above upper limit value, the coating film will be excellent in surface smoothness.

As the fluorinated polymer having no reactive group, PVDF is preferred from the viewpoint of excellent flexibility and impact resistance of the fluororesin layer. In a case where the composition (X1) contains PVDF as the fluororesin (A1), from the viewpoint of excellent adhesion to a substrate, it preferably further contains an acrylic resin as the resin (A2).

As the fluororesin (A1), from the viewpoint of excellent anti-staining properties, water resistance, acid resistance and alkali resistance, a fluorinated polymer having reactive groups is preferred. The reactive groups may, for example, be hydroxy groups, carboxy groups, and amino groups. As the fluororesin (A1), a fluorinated polymer (A11) containing hydroxy groups (hereinafter referred to also as a "hydroxy group-containing fluoropolymer (A11)") or a fluorinated polymer (A12) containing carboxy groups (hereinafter referred to also as a "carboxy group-containing fluoropolymer (A12)") is particularly preferred. The hydroxy group-containing fluoropolymer (A11) or the carboxy group-containing fluoropolymer (A12) contains hydroxy groups or carboxy groups, respectively, whereby when an isocyanate curing agent (particularly a blocked isocyanate curing agent) is as a curing agent, it is excellent in curing speed. Further, it is preferred in that a pigment (C) can be readily dispersed therein, and a cured film with a high gloss (60° glossiness is at least 60%) can be obtained.

<Hydroxy group-containing fluorinated polymer (A11)>

The hydroxy group-containing fluorinated polymer (A11) is preferably a hydroxy group-containing fluorinated polymer having units derived from a fluoroolefin, units derived from a monomer having a hydroxy group (hereinafter referred to also as a "monomer (m1)") copolymerizable with the fluoroolefin, and, as the case requires, units derived from a monomer other than the fluoroolefin and the monomer (m1) (hereinafter referred to also as a "monomer (m2)").

The hydroxy group-containing fluorinated polymer (A11) may be a hydroxy group-containing fluorinated polymer obtained by introducing hydroxy groups by conversion of reactive groups of a polymer. Such a hydroxy group-containing fluorinated polymer is preferably a fluorinated polymer obtainable by reacting, to a fluorinated polymer having units derived from a fluoroolefin, units derived from a monomer having a reactive functional group other than a hydroxy group and, as the case requires, units derived from the above monomer (m2), a compound having a second reactive functional group reactive with the above reactive functional group and a hydroxy group.

The monomer (monomer (m1) or monomer (m2)) to be copolymerized with a fluoroolefin, may be a monomer having fluorine atoms other than a fluoroolefin, but is preferably a monomer having no fluorine atom.

The monomer (m1) is a monomer having a hydroxy group.

The monomer having a hydroxy group may, for example, be allyl alcohol, a hydroxyalkyl vinyl ether (2-hydroxyethyl vinyl ether, 4-hydroxybutyl vinyl ether or cyclohexanediol monovinyl ether), a hydroxyalkyl allyl ether (2-hydroxyethyl allyl ether), a vinyl hydroxy alkanoate (vinyl hydroxypropionate) or a hydroxyalkyl (meth)acrylate (hydroxyethyl (meth)acrylate).

As the monomer (m1), one type may be used alone, or two or more types may be used in combination.

The monomer (m2) may, for example, be a vinyl ether, an allyl ether, a carboxylic acid vinyl ester, a carboxylic acid allyl ester or an olefin, having no reactive group.

The vinyl ether having no reactive group may, for example, be a cycloalkyl vinyl ether (cyclohexyl vinyl ether (hereinafter referred to also as "CHVE")), or an alkyl vinyl ether (nonyl vinyl ether, 2-ethylhexyl vinyl ether, hexyl vinyl ether, ethyl vinyl ether, n-butyl vinyl ether or tert- butyl vinyl ether).

The allyl ether having no reactive group may, for example, be an alkyl allyl ether (ethyl allyl ether or hexyl allyl ether).

The carboxylic acid vinyl ester having no reactive group may, for example, be a vinyl ester of a carboxylic acid (acetic acid, butyric acid, pivalic acid, benzoic acid or propionic acid). Further, it is also possible to use VeoVa-9 or VeoVa-10 (each manufactured by Shell Chemicals, tradename), commercially available as a vinyl ester of a carboxylic acid having a branched alkyl group.

The carboxylic acid allyl ester having no reactive group may, for example, be an allyl ester of a carboxylic acid (acetic acid, butyric acid, pivalic acid, benzoic acid or propionic acid).

The olefin may, for example, be ethylene, propylene or isobutylene.

The monomer (m2) is preferably a cycloalkyl vinyl ether, particularly preferably CHVE, from such a viewpoint that the glass transition temperature of the hydroxy group-containing fluorinated polymer (A11) can be designed to be at least 30°C, and it is possible to suppress blocking of the cured film.

The monomer (m2) is preferably one having a linear or branched alkyl group with at least 3 carbon atoms, from such a viewpoint that the cured film will be excellent in flexibility.

As the monomer (m2), one type may be used alone, or two or more types may be used in combination.

The combination of monomers to constitute the hydroxy group-containing fluorinated polymer (A11) is preferably the following combination (1), particularly preferably the following combination (2) or (3), from the viewpoint of weather resistance, adhesion, flexibility and blocking resistance.

Combination (1)

Fluoroolefin: TFE or CTFE,
Monomer (m1): a hydroxy alkyl vinyl ether,
Monomer (m2): at least one member selected from a cycloalkyl vinyl ether, an alkyl vinyl ether and a carboxylic acid vinyl ester.

Combination (2)

Fluoroolefin: TFE,
Monomer (m1): a hydroxy alkyl vinyl ether,
Monomer (m2): CHVE or tert- butyl vinyl ether.

Combination (3)

Fluoroolefin: CTFE,
Monomer (m1): a hydroxy alkyl vinyl ether,
Monomer (m2): CHVE or tert- butyl vinyl ether.

The proportion of fluoroolefin units is preferably from 30 to 70 mol%, particularly preferably from 40 to 60 mol%, in the total units (100 mol%) in the hydroxy group-containing fluorinated polymer (A11). When the fluoroolefin units are at least the above lower limit value, the cured film will be excellent in weather resistance. When the fluoroolefin units are at most the above upper limit value, in a case where the cured film has a single layer structure, it will be excellent in adhesion to a substrate, and in a case where the cured film has a double-layered structure, the adhesion between the fluororesin layer and the non-fluororesin layer will be excellent.

The proportion of the monomer (m1) units is preferably from 0.5 to 20 mol%, particularly preferably from 1 to 15 mol%, in the total units (100 mol%) in the hydroxy group-containing fluorinated polymer (A11). When the proportion of the monomer (m1) units is at least the above lower limit value, in a case where the cured film has a single layer structure, it will be excellent in adhesion to the substrate, and in a case where the cured film has a double-layered structure, the adhesion between the fluororesin layer and the non-fluororesin layer will be excellent. When the proportion of the monomer (m1) units is at most the above upper limit value, the cured film will be excellent in scratch resistance.

The proportion of the monomer (m2) units is preferably from 20 to 60 mol%, particularly preferably from 30 to 50 mol%, in the total units (100 mol%) in the hydroxy group-containing fluorinated polymer (A11). When the proportion of monomer (m2) units is at least the above lower limit value, the glass transition temperature of the hydroxy group-containing fluorinated polymer (A11) will be proper, and it will be easy to produce a powder coating material. When the proportion of the monomer (m2) units at most the above upper limit value, in a case where the cured film has a single layer structure, it will be excellent in adhesion to the substrate, and in a case where the cured film has a double-layered structure, the adhesion between the fluororesin layer and the non-fluororesin layer will be excellent.

The number average molecular weight of the hydroxy group-containing fluorinated polymer (A11) is preferably from 3,000 to 50,000, particularly preferably from 5,000 to 30,000. When the number average molecular weight of the hydroxy group-containing fluorinated polymer (A11) is at least the above lower limit value, the cured film will be excellent in water resistance and salt water resistance. When the number average molecular weight of the hydroxy group-containing fluorinated polymer (A11) is at most the above upper limit value, the cured film will be excellent in surface smoothness.

The hydroxy value of the hydroxy group-containing fluorinated polymer (A11) is preferably from 5 to 100 mgKOH/g, particularly preferably from 10 to 80 mgKOH/g. When the hydroxy value of the hydroxy group-containing fluorinated polymer (A11) is at least the above lower limit value, in a case where the cured film has a single layer structure, it will be excellent in adhesion to the substrate, and in a case where the cured film has a double-layered structure, the adhesion between the fluororesin layer and the non-fluororesin layer will be excellent. When the hydroxy value of the hydroxy group-containing fluorinated polymer (A11) is at most the above upper limit value, the cured film will be excellent in crack resistance under temperature cycles between a high temperature of at least 100°C and a low temperature of at most 10°C. The measurement of the hydroxy value is carried out in accordance with JIS K 1557-1 (2007 edition).

The glass transition temperature of the hydroxy group-containing fluorinated polymer (A11) is preferably from 30 to 150°C, more preferably from 35 to 120°C, particularly preferably from 35 to 100°C. When the glass transition temperature of the hydroxy group-containing fluorinated polymer (A11) is at least the above lower limit value, it will be easy to produce a powder coating material. When the glass transition temperature of the hydroxy group-containing fluorinated polymer (A11) is at most the above upper limit value, the cured film will be excellent in surface smoothness.

<Carboxy group-containing fluorinated polymer (A12)>

The carboxy group-containing fluorinated polymer (A12) may, for example, be obtained by the following methods.

- A method of reacting, in an organic solvent, hydroxy groups in the hydroxy group-containing fluoropolymer (A11) and an acid anhydride to form ester bonds and carboxy groups.
- A method of melt-kneading the hydroxy group-containing fluorinated polymer (A11) and an acid anhydride to react hydroxy groups in the hydroxy group-containing fluorinated polymer (A11) with the acid anhydride to form ester bonds and carboxy groups.

Carboxy groups in the carboxy group-containing polymer (A12) obtained by such methods are derived from the acid anhydride. The carboxy group-containing fluoropolymer (A12) may have hydroxy groups derived from the hydroxy group-containing fluorinated polymer (A11) as the raw material.

If the composition (X1) contains unreacted raw materials (the hydroxy group-containing fluorinated polymer (A11), the acid anhydride), such unreacted raw materials will be treated as a carboxy group-containing fluorinated polymer (A12).

As the acid anhydride, from the viewpoint of excellent reactivity with the hydroxy group-containing fluorinated polymer (A11), a compound having a molecular weight of from 90 to 200 is preferred. From the viewpoint of excellent reactivity with the hydroxy group-containing fluorinated polymer (A11), a compound having a number of carbon atoms of from 4 to 15 is preferred. From the viewpoint of excellent reactivity with the hydroxy group-containing fluorinated polymer (A11), a compound having a melting point of from 20 to 180°C is preferred.

As the acid anhydride, a dibasic acid anhydride may be mentioned.

The dibasic acid anhydride may, for example, be succinic anhydride (molecular weight: 100.1, melting point: 120°C, number of carbon atoms: 4), glutaric anhydride (molecular weight: 114.1, melting point: 52°C, number of carbon atoms: 5), itaconic anhydride (molecular weight: 112.1, melting point: 67°C, number of carbon atoms: 5), anhydrous 1,2-cyclohexane dicarboxylic acid (hexahydrophthalic anhydride) (molecular weight: 154.0, melting point: 35°C, number of carbon atoms : 8), anhydrous cis-4-cyclohexene-1,2-dicarboxylic acid (molecular weight: 152.0, melting point: 66°C, number of carbon atoms: 8), phthalic anhydride (molecular weight: 148.1, melting point: 131°C, number of carbon atoms: 8), 4-methylhexahydrophthalic anhydride (molecular weight: 168.0, melting point: 22°C, number of carbon atoms: 9), anhydrous 1,8-naphthalic acid (molecular weight: 198.2, melting point: 17°C, number of carbon atoms: 11) or maleic anhydride (molecular weight: 98.1, melting point: 52.6°C, number of carbon atoms: 4).

The glass transition temperature of the carboxy group-containing fluorinated polymer (A12) is preferably from 30 to 150°C, more preferably from 35 to 120°C, particularly preferably from 35 to 100°C. When the glass transition temperature of the carboxy group-containing fluorinated polymer (A12) is at least the above lower limit value, it is easy to produce a powder coating material. When the glass transition temperature of the carboxy group-containing fluorinated polymer (A12) is at most the above upper limit value, the cured film will be excellent in surface smoothness.

(Anti-staining agent (B))

The anti-staining agent (B) consists of a salt (B2). Moreover, there is described in general a fluorinated surfactant (B1)

<Fluorinated surfactant (B1)>

The fluorinated surfactant (B1) may, for example, be an anionic fluorinated surfactant, a cationic fluorinated surfactant, an amphoteric fluorinated surfactant or a nonionic fluorinated surfactant.

The hydrophobic portion of the fluorinated surfactant (B1) is preferably a perfluoroalkyl group or a perfluoroalkyl group having an etheric oxygen atom, from such a viewpoint that it is easy to migrate to the surface of the coated film even when the melt viscosity of the molten coating film is high. Since the surface of the coating film can be sufficiently covered by the hydrophilic portion of the fluorinated surfactant (B1), the alkyl chain is preferably short, i.e. a $C_{1-6}$ perfluoroalkyl group or a $C_{1-6}$ perfluoroalkyl group having an etheric oxygen atom, is preferred, and a $C_{1-6}$ perfluoroalkyl group is particularly preferred.

The hydrophilic portion of the fluorinated surfactant (B1) may be a sulfonate, a sulfuric acid ester salt, a phosphoric acid ester salt or a polyoxyethylene chain. A polyoxyethylene chain is particularly preferred, since the molecular chain can be made long to some extent in a flexible state, so that it can sufficiently cover the surface of the coating film.

Thus, as the fluorinated surfactant (B1), an ethylene oxide adduct having a $C_{1-6}$ perfluoroalkyl group is particularly preferred.

The surface tension of the fluorinated surfactant (B1) is preferably at most 40 mN/m, particularly preferably at most 38 mN/m. When the surface tension is at most the above upper limit value, the fluorinated surfactant (B1) tends to easily migrate to the surface layer of a molten coating film. Further, since the fluorinated surfactant (B1) remaining inside other than the surface layer will be reduced, adhesion between the coating film and the substrate will be excellent.

The surface tension is a value measured by the following method.

The fluorinated surfactant (B1) is dissolved in water to prepare a 0.1 mass% aqueous solution, and using an automatic surface tension meter, the static surface tension at room temperature is measured by a Wilhelmy method.

The following may be mentioned as commercial products of the fluorinated surfactant (B1).

• Novec (registered trademark) series, manufactured by 3M Company:

> FC-4430 (nonionic, containing perfluorobutane sulfonic acid group, surface tension: 21 mN/m),
> FC-4432 (nonionic, containing perfluorobutane sulfonic acid group, surface tension: 21 mN/m).

• Surflon (registered trademark) series, manufactured by AGC Seimi Chemical Co., Ltd.:

> S-211 (anionic, containing $C_{1-6}$ perfluoroalkyl group, surface tension: 15.8 mN/m),
> S-221 (cationic, containing $C_{1-6}$ perfluoroalkyl group, surface tension: 15.8 mN/m),
> S-231 (amphoteric, containing $C_{1-6}$ perfluoroalkyl group, surface tension: 17.5 mN/m),
> S-241 (nonionic, containing $C_{1-6}$ perfluoroalkyl group, surface tension: 16.2 mN/m),
> S-242 (nonionic, $C_{1-6}$ perfluoroalkyl group-containing ethylene oxide adduct, surface tension: 22.9 mN/m),
> S-243 (nonionic, $C_{1-6}$ perfluoroalkyl group-containing ethylene oxide adduct, surface tension: 23.2 mN/m),
> S-420 (nonionic, $C_{1-6}$ perfluoroalkyl group-containing ethylene oxide adduct, surface tension: 23.1 mN/m),
> S-611 (nonionic, $C_{1-6}$ perfluoroalkyl group-containing polymer, surface tension: 18.4 mN/m),
> S-651 (nonionic, $C_{1-6}$ perfluoroalkyl group-containing polymer, surface tension: 23.0 mN/m),
> S-386 (nonionic, $C_{1-6}$ perfluoroalkyl group-containing polymer, surface tension: 22.9 mN/m),
> S-232 (amphoteric, containing $C_{1-6}$ perfluoroalkyl group, surface tension: 14.7 mN/m),

S-233 (amphoteric, containing $C_{1-6}$ perfluoroalkyl group, surface tension: 14.7 mN/m).

- MEGAFAC (registered trademark) series, manufactured by DIC Corporation.:

F-410 (anionic, perfluoroalkyl group-containing carboxylate, surface tension: 23.7 mN/m),
F-444 (nonionic, perfluoroalkyl ethylene oxide adduct, surface tension: 16.8 mN/m).

<Salt (B2)>

In general, the salt (B2) may be a salt composed of at least one anion selected from the group consisting of an organic sulfonic acid ion, an organic carboxylic acid ion and an organic phosphoric acid ester ion, and at least one cation selected from the group consisting of an alkali metal ion, an alkaline earth metal ion, an amphoteric metal ion and an organic ammonium ion (provided that the fluorinated surfactant (B1) is excluded).

In general, the cation of the salt (B2) may preferably be at least one cation selected from the group consisting of an alkali metal ion, an alkaline earth metal ion and an amphoteric metal ion, more preferably at least one cation selected from the group consisting of an alkali metal ion and an alkaline earth metal ion, further preferably at least one cation selected from the group consisting of alkali metal ions, particularly preferably a sodium ion, since such a cation is less likely to remain in the coating film, whereby curing failure or poor appearance due to yellowing of the coating film is less likely to occur.

In general, the anion of the salt (B2) may preferably be an organic sulfonic acid ion, since it tends to easily migrate to the surface of the molten coating film and from the viewpoint of high hydrophilicity.

In general, the organic sulfonic acid ion may preferably be one having a $C_{6-30}$ alkyl group, particularly preferably one having a $C_{5-30}$ alkyl group, whereby crystallization is less likely to occur, and it is possible to cover the entire coating film surface with a thin film.

Specific examples of the salt (B2) may be a dialkyl sulfosuccinate, an alkylbenzene sulfonate, an alkylnaphthalene sulfonate, an alkyl sulfate, a polyoxyethylene alkyl ether sulfuric ester salt, a fatty acid salt and an alkyl phosphate salt. From the viewpoint of availability and less possibility to bring about coloration of the coating film, the salt (B2) of the present invention is a sodium dialkyl sulfosuccinate or sodium alkyl benzene sulfonate.

Commercial products of the salt (B2) may, for example, be "RAPISOL (registered trademark) A-90 (sodium di-2-ethylhexyl sulfosuccinate)" manufactured by NOF Corporation, and "NANSA (registered trademark) HS90/S (sodium alkylbenzene sulfonate)" manufactured by HUNTSMAN.

(Resin (A2))

The resin (A2) being a resin other than the fluororesin (A1) may be a resin to be used in combination with the fluorinated polymer having no reactive groups, or a resin to be used in combination with the fluorinated polymer having reactive groups.

As the resin (A2) to be used in combination with the fluorinated polymer having no reactive groups, an acrylic resin or a polyester resin may be mentioned. The resin to be used in combination with the fluorinated polymer having no reactive groups, may be the after-mentioned acrylic resin having reactive groups, or the after-mentioned polyester resin having reactive groups, but a resin having no reactive groups is preferred.

As the resin (A2) to be used in combination with the above-mentioned PVDF, an acrylic resin is preferred. The acrylic resin to be used in combination with PVDF, is preferably an acrylic resin having no reactive groups. As the acrylic resin having no reactive groups, a homopolymer or copolymer composed mainly of alkyl methacrylate units or alkyl acrylate units is preferred. Particularly preferred is a homopolymer or copolymer of an alkyl methacrylate with an alkyl group having at most 4 carbon atoms.

The number average molecular weight (Mn) of the acrylic resin is preferably from 5,000 to 100,000, particularly preferably from 30,000 to 100,000. When the number average molecular weight of the acrylic resin is at least the above lower limit value, blocking is less likely to occur. When the number average molecular weight of the acrylic resin is at most the above upper limit value, the coating film will be excellent in surface smoothness.

The mass average molecular weight (Mw) of the acrylic resin is preferably from 6,000 to 150,000, more preferably from 40,000 to 150,000, particularly preferably from 60,000 to 150,000. When the mass average molecular weight of the acrylic resin is at least the above lower limit value, blocking is less likely to occur. When the mass average molecular weight of the acrylic resin is at most the above upper limit value, the coating film will be excellent in surface smoothness.

Mw/Mn (hereinafter, Mw/Mn will be referred to also as the polydispersity) being the ratio of the mass average molecular weight to the number average molecular weight of the acrylic resin, is preferably within a range of from 1.0 to 3.0. When the polydispersity (Mw/Mn) is within a range of from 1.0 to 3.0, melting of the resin will be completed in a short period of time, whereby the coating film is likely to be uniform and dense, whereby the durability of the coating film will be improved.

As the resin (A2) to be used in combination with the fluorinated polymer having reactive groups, a thermosetting resin having no fluorine atoms may be mentioned.

Such a thermosetting resin is preferably one which can be layer-separated without being compatible with the fluororesin (A1) in the melting and curing process of the powder coating material. The thermosetting resin is preferably a thermosetting acrylic resin, a thermosetting polyester resin, a thermosetting epoxy resin, a thermosetting urethane resin or a thermosetting silicone resin, and in view of excellent adhesion to a substrate and from such a viewpoint that the fluororesin (A1) is less likely to contaminate the non-fluororesin layer, a thermosetting polyester resin or a thermosetting acrylic resin is more preferred, and a thermosetting polyester resin is particularly preferred.

The polydispersity (Mw/Mn) of the resin (A2) is preferably within a range of from 1.0 to 3.0. When the polydispersity (Mw/Mn) is within a range of from 1.0 to 3.0, melting of the resin will be completed in a short time, whereby it becomes easy to react with the curing agent, and the cured film tends to become uniform, and further, the cured film tends to become dense. Accordingly, components that degrade the cured coating film, are less likely to penetrate, whereby the durability of the cured film will be improved. For example, it is possible to obtain a cured coating film excellent in resistance to ammonia derived from dog's or cat's excreta, resistance to uric acid derived from bird droppings, resistance to formic acid derived from carcasses of insects, and resistant to acid rain derived from air pollution.

<Thermosetting polyester resin>

The thermosetting polyester resin may be one having units derived from a polyvalent carboxylic acid compound and units derived from a polyhydric alcohol compound, and, as the case requires, having units other than these two types of units (e.g. units derived from a hydroxy carboxylic acid compound).

A terminal of a polymer chain of the thermosetting polyester resin is a monovalent unit. In a case where a terminal unit is a unit derived from a polyvalent carboxylic acid compound, the terminal unit has a carboxy group, and in a case where a terminal unit is a unit derived from a polyhydric alcohol, the terminal unit has a hydroxy group.

Units other than terminal units are composed of divalent or higher valent units, and in a linear polymer, with the exception of the terminal units, its units are composed solely of divalent units. That is, a linear thermosetting polyester resin consists, except for the terminal units, solely of divalent units, i.e. divalent units derived from a polyvalent carboxylic acid compound and divalent units derived from a polyhydric alcohol compound. A branched thermosetting polyester resin has at least one trivalent or higher valent unit, and consists, except for the trivalent or higher valent unit and terminal units, substantially solely of divalent units. The trivalent or higher valent unit may, for example, be a unit having a hydroxy group removed from each of at least three carboxy groups in a trivalent or higher polyvalent carboxylic acid compound or a unit having a hydrogen atom removed from each of at least three hydroxy groups in a trihydric or higher polyhydric alcohol compound.

Hereinafter, units derived from a polyvalent carboxylic acid compound may be referred to also as "polyvalent carboxylic acid units", and units derived from a polyhydric alcohol compound may be referred to also as "polyhydric alcohol units".

The thermosetting polyester resin is preferably a linear polymer or a branched polymer having a small number of branches, particularly preferably a linear polymer. A branched polymer having many branches tends to have a high softening point and a high melting temperature, and therefore, in a case where the thermosetting polyester resin is a branched polymer, the softening temperature should preferably be at most 200°C. The thermosetting polyester resin is preferably one which is solid at room temperature and which has a softening point of from 100 to 150°C.

The number average molecular weight of the thermosetting polyester resin is preferably at most 5,000, whereby the melt viscosity of the coating film can be made to be properly low. The mass average molecular weight of the thermosetting polyester resin is preferably from 2,000 to 20,000, more preferably from 2,000 to 10,000, whereby the melt viscosity of the coating film can be made to be properly low. The thermosetting polyester resin is more preferably one having a number average molecular weight of at most 5,000 and a mass average molecular weight of from 2,000 to 20,000, particularly preferably one having a number average molecular weight of at most 5,000 and a mass average molecular weight of from 2,000 to 10,000.

The thermosetting polyester resin has reactive groups capable of reacting with the curing agent (D). At least a portion of the terminal units of the polymer chain of the thermosetting polyester resin is preferably a monovalent polyvalent carboxylic acid unit or a monovalent polyhydric alcohol unit, and in the former case, a free carboxy group in the unit can function as a reactive group, and in the latter case, a free hydroxy group in the unit can function as a reactive group. A unit having a reactive group may be a unit other than a terminal unit. For example, a divalent polyhydric alcohol unit derived from a polyhydric alcohol compound having at least three hydroxy groups, is a unit having a free hydroxy group, and therefore, a thermosetting polyester resin may have a divalent or higher valent unit having such a reactive group.

The reactive groups in the thermosetting polyester resin are preferably hydroxy groups, whereby the cured film will be excellent in water resistance, alkali resistance and acid resistance. The thermosetting polyester resin usually has hydroxy groups and carboxy groups, and one mainly having hydroxy groups, is preferred as the thermosetting polyester resin.

The hydroxy value of the thermosetting polyester resin is preferably from 20 to 100 mgKOH/g, particularly preferably from 20 to 80 mgKOH/g. The acid value is preferably from 1 to 80 mgKOH/g, particularly preferably from 3 to 50 mgKOH/g.

The hydroxy value and acid value are measured in accordance with JIS K 0070 (1992 edition).

The thermosetting polyester resin is preferably a thermosetting polyester resin having units derived from a $C_{8-15}$ aromatic polyvalent carboxylic acid compound and units derived from a $C_{2-10}$ polyhydric alcohol compound, from such a viewpoint that in a case where the cured film has a double-layered structure, it will be excellent in adhesion to the fluororesin layer, the cured film will be excellent in impact resistance, and dispersibility of the pigment (C) will be excellent.

The polyvalent carboxylic acid units are preferably units derived from a $C_{8-15}$ aromatic polyvalent carboxylic acid compound. The $C_{8-15}$ aromatic polyvalent carboxylic acid compound is a compound having an aromatic ring and at least two carboxy groups, and the carboxy groups are bonded to carbon atoms of the aromatic ring. Further, it may be an anhydride with a structure having the two carboxy groups dehydrated.

The aromatic ring is preferably a benzene ring or a naphthalene ring, particularly preferably a benzene ring. In the case of a benzene ring, there may be two benzene rings present in one molecule.

The number of carboxy groups in the aromatic polyvalent carboxylic acid compound is preferably from 2 to 4, particularly preferably 2.

The $C_{8-15}$ aromatic polycarboxylic acid compound may, for example, be phthalic acid, isophthalic acid, terephthalic acid, naphthalene dicarboxylic acid, trimellitic acid, pyromellitic acid or phthalic anhydride.

The polyvalent carboxylic acid units are preferably units derived from isophthalic acid, whereby the cured film will be excellent in weather resistance.

The polyhydric alcohol units are preferably units derived from a $C_{2-10}$ polyhydric alcohol compound. The $C_{2-10}$ polyhydric alcohol compound is a compound having at least two hydroxy groups. Such a polyhydric alcohol compound is preferably an aliphatic polyhydric alcohol or an alicyclic polyhydric alcohol, particularly preferably an aliphatic polyhydric alcohol. The number of hydroxy groups in the polyhydric alcohol compound is preferably 2 to 4, particularly preferably 2.

The $C_{2-10}$ polyhydric alcohol compound may, for example, be ethylene glycol, diethylene glycol, triethylene glycol, 1,2-propanediol, 1,3-propanediol, 1,3-butanediol, 1,4-butanediol diol, 1,5-pentanediol, neopentyl glycol, spiro glycol, 1,10-decanediol, 1,4-cyclohexane dimethanol, trimethylolethane, trimethylolpropane, glycerine or pentaerythritol.

The polyhydric alcohol units are preferably units derived from a $C_{3-8}$ polyhydric alcohol, particularly preferably units derived from a $C_{4-6}$ polyhydric alcohol, whereby adhesion to the substrate will be excellent, and further, flexibility will be excellent so that even when a heat history (thermal cycling) is applied, delamination from the fluororesin layer is less likely to occur in the case where the cured film has a double-layered structure.

As the polyhydric alcohol, preferred is neopentyl glycol, 1,2-pentanediol, 1,5-pentanediol or trimethylolpropane, and in view of easy availability, more preferred is neopentyl glycol or trimethylolpropane.

The thermosetting polyester resin can be produced by a known method for producing a thermosetting polyester resin for a powder coating material, by using an aromatic polyvalent carboxylic acid compound and a polyhydric alcohol compound as raw materials. For example, the raw materials are subjected to an esterification or ester exchange reaction at from 200 to 280°C, followed by a polycondensation reaction at 230 to 290°C using a catalyst under reduced pressure, and then, a depolymerization reaction is conducted with an alcohol component, whereby a thermosetting polyester resin is obtainable.

In order to facilitate formation of a cured film having a double-layered structure by facilitating layer-separation of the fluororesin layer and the non-fluororesin layer in the melting and curing process of the powder coating material, it is preferred that the thermosetting polyester resin has a proper ester group concentration and aromatic ring concentration.

The ester group concentration is one having the content of ester groups in the thermosetting polyester resin represented by mass%, and can be obtained from the following formula (1).

$$\text{Ester group concentration (mass\%)} = 2m/[(a + b) \times m + a] \qquad (1)$$

m: An average value of the number of units in the thermosetting polyester resin, as calculated from an average value of the molecular weight of each unit and a value of the number average molecular weight of the thermosetting polyester resin.

a: An average value of the number of carbon atoms in the polyhydric alcohol units.

b: An average value of the number of carbon atoms in the polyvalent carboxylic acid units.

The ester group concentration in the thermosetting polyester resin is preferably from 20 to 60 mass%, more preferably from 25 to 50 mass%, particularly preferably from 30 to 40 mass%.

The aromatic ring concentration is one having the content of aromatic rings in the thermosetting polyester resin represented by mmoL/g, and can be obtained from the following formula (2).

$$\text{Aromatic ring concentration (mmoL/g)} = [(\text{total number of aromatic rings in the raw materials used to obtain the thermosetting polyester resin (moL)})/(\text{total weight of the raw materials used to obtain the thermosetting polyester resin (g)})] \times 1{,}000$$

The aromatic ring concentration in the thermosetting polyester resin is preferably from 20 to 35 mmoL/g, more preferably from 22 to 34 mmoL/g, particularly preferably from 25 to 33 mmoL/g.

Commercial products of the thermosetting polyester resin may, for example, be "CRYLCOAT (registered trademark) 4642-3" and "CRYLCOAT (registered trademark) 4890-0", manufactured by DAICEL-ALLNEX LTD., and "GV-250", "GV-740" and "GV-175", manufactured by Japan U-PICA Co., Ltd..

<Thermosetting acrylic resin>

The thermosetting acrylic resin may be one which is a polymer having units derived from a (meth) acrylate and which has reactive groups such as carboxy groups, hydroxy groups, sulfo groups, and epoxy groups. Such a thermosetting acrylic resin is excellent in dispersibility of the pigment (C).

The glass transition temperature of the thermosetting acrylic resin is preferably from 30 to 60°C. When the glass transition temperature is at least the above lower limit value, blocking is less likely to occur. When the glass transition temperature is at most the above upper limit value, the cured film will be excellent in surface smoothness.

In a case where the thermosetting acrylic resin has carboxy groups, the acid value of the thermosetting acrylic resin is preferably from 150 to 400 mgKOH/g. When the acid value of the thermosetting acrylic resin is at least the above lower limit value, there will be a dispersibility improving effect for the pigment (C). When the acid value of the thermosetting acrylic resin is at most the above upper limit value, the cured film will be excellent in moisture resistance.

For the same reason, in a case where it has other reactive groups such as epoxy groups, the molecular weight per reactive group (e.g. the epoxy equivalent) is preferably from 300 to 800.

Commercial products of the thermosetting acrylic resin may, for example, be "FINEDIC (registered trademark) A-249", "FINEDIC (registered trademark) A-251" and "FINEDIC (registered trademark) A-266", manufactured by DIC Corporation, "ALMATEX (registered trademark) PD6200" and "ALMATEX (registered trademark) PD7310", manufactured by Mitsui Chemicals, Inc., and "SANPEX PA-55" manufactured by Sanyo Chemical Industries, Ltd.

<Thermosetting epoxy resin>

The thermosetting epoxy resin may, for example, be a bisphenol A type epoxy resin, and a bisphenol F type epoxy resin.

Commercial products of the thermosetting epoxy resin may, for example, be "EPIKOTE (registered trademark) 1001", "EPIKOTE (registered trademark) 1002" and "EPIKOTE (registered trademark) 4004P", manufactured by Mitsubishi Chemical Corporation, "EPICLON (registered trademark) 1050" and "EPICLON (registered trademark) 3050", manufactured by DIC Corporation, "EPOTOHTO (registered trademark) YD-012" and "EPOTOHTO (registered trademark) YD-014", manufactured by Nippon Steel & Sumikin Chemical Co., Ltd., "Denacol (registered trademark) EX-711" manufactured by Nagase ChemteX Corporation., and "EHPE3150" manufactured by Daicel Corporation.

<Thermosetting urethane resin>

The thermosetting urethane resin may be a mixture obtained by mixing, or a resin obtained by reacting, a polyol (an acrylic polyol, a polyester polyol, a polyether polyol, propylene glycol or propylene oxide) and an isocyanate compound. It is preferred to use a powder coating material comprising a powdery polyol (an acrylic polyol, a polyester polyol or a polyether polyol) and a powdery isocyanate compound.

<Thermosetting silicone resin>

The silicone resin may be one which has a branched structure and has silanol groups (Si-OH) as reactive groups that undergo a dehydration condensation with each other for curing, and which is capable of forming a cured film of a three-dimensional crosslinked structure after the curing. Otherwise, a relatively low molecular weight silicone resin (silicone resin intermediate for modification) and another thermosetting resin (a thermosetting alkyd resin, a thermoset polyester resin, a thermosetting epoxy resin or a thermosetting acrylic resins) may be used in combination.

Commercial products of the thermosetting silicone resin may, for example, be "GLASCA HPC-7506", manufactured by JSR Corporation, "Zemrack (registered trademark)", manufactured by Kaneka Corporation, and "SILIKOPON (registered trademark) EF", "SILIKOPON (registered trademark) EW", "SILIKOPON (registered trademark) EC" and "SILIKOPON (registered trademark) ED", manufactured by Evonik.

(Pigment (C))

The pigment (C) is preferably at least one member selected from the group consisting of a luster pigment, an anticorrosive pigment, a coloring pigment and an extender pigment.

The luster pigment is a pigment composed of flaky powder particles, to luster a coating film. The luster pigment may, for example, be aluminum powder, nickel powder, stainless steel powder, copper powder, bronze powder, gold powder, silver powder, mica powder, graphite powder, glass flakes or scale-like iron oxide powder.

The anticorrosive pigment is a pigment to prevent corrosion or deterioration of a substrate, for the substrate which is required to have corrosion resistance. The anticorrosive pigment is preferably a lead-free anticorrosive pigment which presents little load to the environment. The lead-free anticorrosive pigment may, for example, be zinc cyanamide, zinc oxide, zinc phosphate, calcium magnesium phosphate, zinc molybdate, barium borate or calcium zinc cyanamide.

The coloring pigment is a pigment to color a coating film. The coloring pigment may, for example, be titanium oxide, carbon black, iron oxide, phthalocyanine blue, phthalocyanine green, quinacridone, isoindolinone, benzimidazolone or dioxazine.

The extender pigment is a pigment to improve the hardness of a coating film and to increase the thickness of the coating film. Further, it is preferably incorporated from such a viewpoint that when the substrate is cut, the cut surface of the coating film can be made clean. The extender pigment may, for example, be talc, barium sulfate, mica or calcium carbonate.

Titanium oxide is preferably one having surface treatment applied so that a photocatalyst reaction is unlikely to proceed. Specifically, titanium oxide surface-treated with e.g. silica, alumina, zirconia, selenium or an organic component (such as a polyol) is preferred, and particularly preferred is titanium oxide having the titanium oxide content adjusted to be from 83 to 90% by such surface treatment. When the titanium oxide content is at least the above lower limit value, the coating film will be excellent in whiteness. When the titanium oxide content is at most the above upper limit value, the coating film will be scarcely deteriorated.

Commercial products of titanium oxide may, for example, be "TIPAQUE (registered trademark) PFC105" (titanium oxide content: 87 mass%) and "TIPAQUE (registered trademark) CR95" (titanium oxide content: 90 mass%), manufactured by Ishihara Sangyo Kaisha, Ltd., "D918" (titanium oxide content: 85 mass%) manufactured by Sakai Chemical Industry Co., Ltd., and "Ti-Pure (registered trademark) R960" (titanium oxide content: 89 mass%) and "Ti-Select (registered trademark) "(titanium oxide content: 90 mass%), manufactured by DuPont.

(Curing agent (D))

The curing agent (D) is a compound to cure a resin (fluorinoresin (A1), resin (A2)) by reacting with reactive groups of the resin to cross-link the resin or to increase the molecular weight. The curing agent (D) has at least two reactive groups capable of reacting with the reactive groups (hydroxy groups, and carboxy groups) of the resin. The reactive groups of the curing agent (D) are preferably reactive groups capable of reacting when heated and melted, since it is not desirable that they are reactive at room temperature. For example, a blocked isocyanate group is preferred, rather than an isocyanate group having high reactivity at room temperature. A blocked isocyanate group becomes an isocyanate group as the blocking agent is desorbed when the powder coating material is heated and melted, and the isocyanate group will then act as a reactive group.

As the curing agent (D), it is possible to use a known compound, for example, a blocked isocyanate curing agent, a β-hydroxyalkyl amine curing agent or an epoxy curing agent. The β-hydroxyalkyl amine curing agent may, for example, be a melamine resin, a guanamine resin, a sulfo-amide resin, a urea resin or an aniline resin, wherein a hydroxymethyl group or an alkoxymethyl group is bonded to a nitrogen atom of an amino group or an amide group. The epoxy curing agent may, for example, be triglycidyl isocyanurate.

A blocked isocyanate curing agent is particularly preferred from the viewpoint of excellent adhesion to a substrate, processability of the product after coating and water resistance of the cured film.

In the case of a carboxy group-containing fluororesin (A12) having all hydroxy groups in a hydroxy group-containing fluororesin (A11) converted to carboxy groups, the curing agent (D) is preferably a β-hydroxyalkyl amine curing agent or an epoxy curing agent.

As the curing agent (D), one type may be used alone, or two or more types may be used in combination.

The softening temperature of the curing agent (D) is preferably from 10 to 120°C, particularly preferably from 40 to 100°C. When the softening temperature is at least the above lower limit value, the powder coating material will be scarcely cured at room temperature, and granular agglomerates are less likely to be formed. When the softening temperature is at most the above upper limit value, at the time of producing a powder by melt kneading the composition, the curing agent (D) can easily be homogeneously dispersed in the powder, and the obtainable cured film will be excellent in surface smoothness, strength and moisture resistance.

As the blocked isocyanate curing agent, preferred is one which is solid at room temperature.

The blocked isocyanate curing agent is preferably one produced by reacting a polyisocyanate obtained by reacting an aliphatic, aromatic or aromatic-aliphatic diisocyanate and a low molecular compound having active hydrogen, with a blocking agent, for masking.

The diisocyanate may, for example, be tolylene diisocyanate, 4,4'-diphenylmethane diisocyanate, xylylene diisocyanate, hexamethylene diisocyanate, 4,4'-methylenebis(cyclohexyl isocyanate), methylcyclohexane diisocyanate, bis(isocyanatomethyl) cyclohexane, isophorone diisocyanate, dimer acid diisocyanate or lysine diisocyanate.

The low molecular compound having active hydrogen may, for example, be water, ethylene glycol, propylene glycol, trimethylolpropane, glycerin, sorbitol, ethylenediamine, ethanolamine, diethanolamine, hexamethylenediamine, isocyanurate, uretdione, a low molecular weight polyester containing hydroxy groups or polycaprolactone.

The blocking agent may, for example, be an alcohol (methanol, ethanol or benzyl alcohol), a phenol (phenol or cresol), a lactam (caprolactam or butyrolactam) or an oxime (cyclohexanone, oxime or methyl ethyl ketoxime).

(Curing catalyst (E))

The curing catalyst (E) is one to accelerate the curing reaction and to provide good chemical properties and physical properties to a cured film.

In the case of using a blocked isocyanate curing agent, the curing catalyst (E) is preferably a tin catalyst (tin octylate, tributyltin laurate or dibutyltin dilaurate).

As the curing catalyst, one type may be used alone, or two or more types may be used in combination.

(Component (F))

The composition (X1) may contain, as the case requires, a component (F).

The component (F) may, for example, be a ultraviolet absorber, a light stabilizer, a matting agent (ultrafine synthetic silica), a leveling agent, a surface adjusting agent (to improve the surface smoothness of a coating film), a degassing agent (having a function to discharge air included in the powder, a blocking agent, and moisture coming out from the curing agent (D), out of the coating film, so that they will not remain inside of the coating film, and it is usually solid, but when melted, becomes to have a very low viscosity), a filler, a heat stabilizer, a thickener, a dispersing agent, an antistatic agent, a rust inhibitor, a silane coupling agent, an antifouling agent or a low-staining agent.

<Ultraviolet absorber>

In the case where the coating film has a double-layered structure, in order to facilitate to concentration of a ultraviolet absorber in the fluororesin layer in the melting and curing process of the powder coating material, it is preferred to select a ultraviolet absorber which is likely to be concentrated in the fluororesin layer in consideration of the physical properties of the ultraviolet absorber. For example, as between a lipophilic ultraviolet absorber and a hydrophilic ultraviolet absorber, the lipophilic ultraviolet absorber will be more readily concentrated in the fluororesin layer. Further, the affinity for the fluororesin (A1) may be different depending upon the difference in the type (the difference in the chemical structure), and the physical properties (molecular weight, melting point, and boiling point) of the ultraviolet absorber.

As the ultraviolet absorber, either an organic ultraviolet absorber or an inorganic ultraviolet absorber may be used.

As the ultraviolet absorber, one type may be used alone, or two or more types may be used in combination.

The organic ultraviolet absorber may, for example, be a salicylate ultraviolet absorber, a benzotriazole ultraviolet absorber, a benzophenone ultraviolet absorber or a cyanoacrylate ultraviolet absorber.

As the organic ultraviolet absorber, a compound having a molecular weight of from 200 to 1,000 is preferred. When the molecular weight is at least 200, it is less likely to volatilize in the melting and curing process of the powder coating material and can remain in the coating film. When the molecular weight is at most 1,000, it can stay in the fluororesin layer in the case where the coating film has a double-layered structure.

As the organic ultraviolet absorber, a compound having a melting point of from 50 to 150°C is preferred. When the melting point is at least 50°C, it is less likely to volatilize in the melting and curing process of the powder coating material and can remain in the coating film. When the melting point is at most 150°C, it is readily meltable in the melting and curing process of the powder coating material, and can remain in the fluororesin layer in the case where the coating film has a double-layered structure.

As the organic ultraviolet absorber, a compound having a volatilization temperature of from 180 to 400°C is preferred, and a compound having a volatilization temperature of from 220 to 350°C is particularly preferred. In the melting and curing process of the powder coating material, a temperature condition of from 150 to 220°C is required, and therefore, within this range, the organic ultraviolet absorber is less likely to volatilize and can remain in the fluororesin layer in the case where the coating film has a double-layered structure.

Commercial products of the organic ultraviolet absorber may, for example, be "Tinuvin (registered trademark) 326" (molecular weight: 315.8, melting point: 139°C), "Tinuvin (registered trademark) 405" (molecular weight: 583.8 , melting point: 74 to 77°C), "Tinuvin (registered trademark) 460" (molecular weight: 629.8, melting point: 93 to 102°C), "Tinuvin (registered trademark) 900" (molecular weight: 447.6, melting point: 137 to 141°C) and "Tinuvin (registered trademark) 928" (molecular weight: 441.6, melting point: 109 to 113°C), manufactured by BASF, "Sanduvor (registered trademark) VSU powder" (molecular weight: 312.0, melting point: 123 to 127°C) manufactured by Clariant, and "Hastavin (registered trademark) PR-25 Gran" (molecular weight: 250.0, melting point: 55 to 59°C) manufactured by Clariant.

The inorganic ultraviolet absorber may, for example, be a filler-type inorganic ultraviolet absorber including an ultraviolet absorbing oxide (zinc oxide or cerium oxide).

The inorganic ultraviolet absorber is preferably composite particles of titanium oxide and zinc oxide, composite particles of titanium oxide and cerium oxide, composite particles of zinc oxide and cerium oxide or composite particles of titanium oxide, zinc oxide and cerium oxide.

<Light stabilizer>

The light stabilizer is one to protect a resin (fluororesin (A1), resin (A2)) in the coating film from ultraviolet rays. Particularly, it is used to protect the resin (A2) susceptible to ultraviolet rays.

The light stabilizer is preferably a hindered amine light stabilizer having a molecular weight of from 300 to 5,000 and a melting point of from 50 to 250°C, from such a viewpoint that it is readily concentrated in the non-fluororesin layer in the melting and curing process of the powder coating material. A hindered amine light stabilizer having a molecular weight of from 400 to 4,000 and a melting point of from 60 to 200°C, is more preferred from such a viewpoint that it can be uniformly diffused in the composition during kneading.

As the light stabilizer, one type may be used alone, or two or more types may be used in combination.

Commercial products of the hindered amine light stabilizer may, for example, be "Tinuvin (registered trademark) 111FDL" (molecular weight: 2,000 to 4,000, melting point: 63°C), "Tinuvin (registered trademark) 144" (molecular weight: 685, melting point: 146 to 150°C) and "Tinuvin (registered trademark) 152" (molecular weight: 756.6, melting point: 83 to 90°C), manufactured by BASF, and "Sanduvor (registered trademark) 3051 powder" (molecular weight: 364.0, melting point: 225°C), "Sanduvor (registered trademark) 3070 powder" (molecular weight: 1,500, melting point: 148°C) and "VP Sanduvor (registered trademark) PR-31" (molecular weight: 529, melting point: 120 to 125°C), manufactured by Clariant.

(Content of each component of composition (X1))

The content of the fluororesin (A1) in the composition (X1) is preferably from 10 to 85 mass%, more preferably from 15 to 80 mass%, particularly preferably from 15 to 75 mass%, in the composition (X1) (100 mass%). When the content of the fluororesin (A1) is at least the above lower limit value, the coating film will be excellent in weather resistance. When the content of the fluororesin (A1) is at most the above upper limit value, it is possible to reduce the cost of the coating film.

In a case where the composition (X1) contains a resin (A2), the content of the resin (A2) in the composition (X1) is preferably from 10 to 90 parts by mass, more preferably from 20 to 80 parts by mass, particularly preferably from 25 to 75 parts by mass, per 100 parts by mass of the total of the fluororesin (A1) and the resin (A2) in the composition (X1). When the content of the resin (A2) is at least the above lower limit value, it is possible to reduce the cost of the coating film. When the content of the resin (A2) is at most the above upper limit value, the weather resistance of the coating film will be excellent.

The content of the anti-staining agent (B) in the composition (X1) is preferably from 0.01 to 15 parts by mass, particularly preferably from 0.05 to 10 parts by mass, per 100 parts by mass of the resin component contained in the composition (X1). When the content is at least the above lower limit value, the stain resistance will be excellent. When the content is at most the above upper limit value, the coating film will be excellent in water resistance and moisture resistance.

The content of the salt (B2) in the composition (X1) is more preferably from 0.01 to 15 parts by mass, particularly preferably from 0.05 to 10 parts by mass, per 100 parts by mass of the resin component contained in the composition (X1). The salt (B2) has an effect weak as compared with the fluorinated surfactant (B1), and therefore, its content is adjusted to be slightly large.

In a case where the composition (X1) contains a pigment (C), the content of the pigment (C) in the composition (X1) is preferably from 20 to 200 parts by mass, particularly preferably from 50 to 150 parts by mass, per 100 parts by mass of the resin component contained in the composition (X1).

In a case where the composition (X1) contains a curing agent (D), the content of the curing agent (D) in the composition (X1) is preferably from 1 to 50 parts by mass, particularly preferably from 3 to 30 parts by mass, per 100 parts by mass of the resin component contained in the composition (X1).

In the case where the curing agent (D) is a blocked isocyanate curing agent, the content of the blocked isocyanate curing agent in the composition (X1) is preferably in such an amount that the molar ratio of the isocyanate group to the hydroxy group in the composition (X1) would be from 0.05 to 1.5, particularly preferably from 0.8 to 1.2. When the molar ratio is at least the lower limit value in the above range, the curing degree of the coating material will be high, and the adhesion between the fluororesin layer and the non-fluororesin layer, and the hardness and chemical resistance of the cured film, will be excellent. When the molar ratio is at most the upper limit value in the above range, the cured film is less likely to become brittle, and the heat resistance, chemical resistance, and moisture resistance of the cured film will be excellent.

In the case where the composition (X1) contains a curing catalyst (E), the content of the curing catalyst (E) in the composition (X1) is preferably from 0.0001 to 10 parts by mass, per 100 parts by mass in total of solid contents in the composition (X1) other than the pigment (C). When the content of the curing catalyst (E) is at least the above lower limit value, the catalytic effect can be sufficiently obtainable. When the content of the curing catalyst (E) is at most the above upper limit value, gas such as air included in the powder coating material (I) in the melting and curing process of the powder coating material, will be readily released, and there will be little reduction in the heat resistance, weather resistance and water resistance of the cured film caused by the remaining gas.

In a case where the composition (X1) contains components (F), the total content of components (F) in the composition (X1) is preferably at most 45 mass%, particularly preferably at most 30 mass%, in the composition (X1) (100 mass%).

[Powder coating material (I)]

The powder coating material (I) contains at least one type of the powder (X1).

The content of the powder (X1) in the powder coating material (I) is preferably from 50 to 100 mass%, more preferably from 70 to 100 mass%, further preferably from 80 to 100 mass%, particularly preferably from 90 to 100 mass%. The powder coating material (I) may be a coating material composed solely of the powder (X1).

In the case where the powder (X1) contained in the powder coating material (I) contains the resin (A2) which can be layer-separated without being compatible with the fluororesin (A1), by applying the powder coating material (I) to the substrate by one coating, it is possible to form a double-layered film having a non-fluororesin layer on the substrate side and a fluororesin layer on the air side.

For example, in the case of the powder coating material (I) comprising the hydroxy group-containing fluorinated polymer and the curable polyester resin, the powder material (I) is applied, by one coating, to a substrate to form a coating film made of a melt of the powder coating material (I) and to let reactive components in the coating film be reacted, followed by cooling and curing the coating film, whereby a fluororesin layer composed mainly of a cured product of the fluororesin (A1) contained in the powder (X1), and a non-fluorinated resin layer composed mainly of the resin (A2) contained in the powder (X1) or its cured product, undergo layer-separation. In the present invention, the reaction, curing and layer-separation may proceed simultaneously.

(Process for producing powder coating material (I))

The powder coating material (I) may, for example, be produced by a production process having the following step (a), step (b) and step (c).

   (a) A step of melt-kneading a mixture which comprises the fluororesin (A1) and the anti-staining agent (B) and may contain, as the case requires, the resin (A2), the pigment (C), the curing agent (D), the curing catalyst (E), the component (F), to obtain a kneaded product composed of the composition (X1).
   (b) A step of pulverizing the kneaded product composed of the composition (X1) to obtain a powder (X1).

(c) As the case requires, a step of classifying the powder (X1).

<Step (a)>

After preparing a mixture by mixing the respective components, the mixture is melt-kneaded to obtain a kneaded product in which the respective components are homogenized.

Each component is preferably preliminarily pulverized into a powder form.

The apparatus to be used for mixing may, for example, be a high speed mixer, a V type mixer or an inversion mixer.

The apparatus to be used for melt-kneading may, for example, be a single-screw extruder, a twin-screw extruder or a planetary gear.

The kneaded product is preferably pelletized after cooling.

<Step (b)>

The apparatus to be used for pulverization may be a pulverizer such as a pin mill, a hammer mill or a jet mill.

<Step (c)>

In order to remove a powder having a too large particle size or a powder having a too small particle size, it is preferred to carry out classification after the pulverization. In the classification, it is preferred to remove at least either one of particles having a particle size of less than 10 $\mu$m and particles having a particle size exceeding 100 $\mu$m.

The classification method may, for example, be a method by sieving, and an air classification method.

The average particle size of the powder (X1) is, for example, preferably from 25 to 50 $\mu$m by a 50% average volume particle size distribution. The measurement of the particle size of the powder is usually carried out by using a particle size measuring apparatus of a type to capture the potential change during passage through pores, a laser diffraction system, an image judgement system, or a sedimentation rate measurement system.

(Mechanism of action)

The above-described powder coating material (I) contains the fluororesin (A1), whereby it is possible to form a coating film excellent in acid resistance and weather resistance. Particularly in the case of containing the resin (A2) which can be layer separated as having low compatibility with the fluororesin (A1), it is possible to form, by one coating, a coating film wherein a fluororesin layer composed mainly of a cured product of the fluororesin (A1) and a non-fluororesin layer composed mainly of the resin (A2) or its cured product, are layer-separated. The non-fluororesin layer will be disposed on the substrate side, and the fluororesin layer will be disposed on the air side, whereby the coating film will be excellent in acid-resistance and weather resistance.

Further, the powder coating material (I) as described above contains the anti-staining agent (B), whereby it is possible to form a coating film excellent in stain resistance. That is, in a short period of time during which melting and curing or solidification of the powder coating material (I) proceed, the anti-staining agent (B) readily migrates to the surface of the molten coating film to sufficiently cover the coating film, thereby to make the surface of the coating film hydrophilic.

Whereas, in the case of a conventional powder coating material containing an organic silicate compound as an anti-staining agent, surface irregularities tend to appear on the surface of the coating film (poor surface smoothness of the coating film) due to agglomeration by a condensation reaction of the organic silicate compound during the melt-kneading at the time of the production of the powder coating material. Further, it is thereby difficult to obtain a coating film having a high gloss. On the other hand, in the powder coating material (I) as described above, it is unnecessary to contain an organic silicate compound to make the surface of the coating film hydrophilic. Therefore, there will be no formation of agglomerates by a condensation reaction of an organic silicate compound during the melt-kneading at the time of producing the powder coating material, and surface irregularities are less likely to appear on the surface of the coating film (the coating film will be excellent in surface smoothness). Further, the coating film will be excellent in gloss.

[Powder coating material (II)]

The powder coating material (II) comprises at least one type of the following powder (X2) and at least one type of the following powder (Y).

Powder (X2): A powder composed of a composition (X2) containing the fluororesin (A1). The composition (X2) may contain, as the case requires, the resin (A2), the anti-staining agent (B), the pigment (C), the curing agent (D), the curing catalyst (E) and/or the component (F). However, when the composition (Y) does not contain the anti-staining agent (B), the composition (X2) necessarily contains the anti-staining agent (B).

Powder (Y): A powder composed of a composition (Y) containing the resin (A2) and not containing the fluororesin (A1). The composition (Y) may contain, as the case requires, the anti-staining agent (B), the pigment (C), the curing agent (D), the curing catalyst (E) and/or the component (F). However, when the composition (X2) does not contain the anti-staining agent (B), the composition (Y) necessarily contains the anti-staining agent (B).

The total content of the powder (X2) and the powder (Y) in the powder coating composition (II) is preferably from 50 to 100 mass%, more preferably from 70 to 100 mass%, further preferably from 80 to 100 mass%, particularly preferably from 90 to 100 mass%. The powder coating (II) may be a coating material composed solely of the powder (X2) and the powder (Y). The mixing ratio of the powder (X2) to the powder (Y) in the powder coating composition (II) (Powder (X2)/Powder (Y)) is preferably from 10/90 to 90/10 (mass ratio), more preferably from 20/80 to 80/20 (mass ratio), particularly preferably from 25/75 to 75/25 (mass ratio). When the proportion of the powder (X2) is at least the above lower limit value, the weather resistance of the coating film will be excellent. When the proportion of the powder (Y) is at least the above lower limit value, it is possible to reduce the cost of the coating film.

If the total composition of the respective components in the mixture of the powder (X2) and the powder (Y) in the powder coating material (II) is assumed to be a composition, the composition of such a composition (hereinafter referred to as the composition (X2 + Y)) is a composition equivalent to the composition (X1) in the above-described powder coating material (I) (provided that it is the composition (X1) containing the resin (A2)).

For example, the content of the resin (A2) in the composition (X2 + Y), is, like the above-described composition (X1), preferably from 10 to 90 parts by mass, more preferably from 20 to 80 parts by mass, particularly preferably from 25 to 75 parts by mass, per 100 parts by mass of the total the fluororesin (A1) and the resin (A2) in the composition (X2 + Y). Therefore, in the case where the content of the resin (A2) in the composition (X2 + Y) and the content of the resin (A2) in the composition (X1) are the same, the content of the resin (A2) in the composition (X2) is smaller than the content of the resin (A2) in the composition (X1), or the composition (X2) may not contain the resin (A2).

The content of components other than the resins in the composition (X2 + Y) is substantially the same content as in the composition (X1) containing the resin (A2).

In the case where the powder (Y) contained in the powder coating material (II) contains the resin (A2) which can be layer-separated without being compatible with the fluororesin (A1), by applying the powder coating material (II) to a substrate by one coating, it is possible to form a double-layered structure having a non-fluororesin layer on the substrate side and a fluororesin layer on the air side.

For example, in the case of the powder coating material (II) comprising the powder (X2) containing the above-mentioned hydroxy group-containing fluorinated polymer, and the powder (Y) containing the above-mentioned curable polyester resin, the powder coating material (II) is applied on a substrate by one coating, to form a coating film made of a melt of the powder coating material (II) and to let reactive components in the coating film be reacted, followed by cooling and curing the coating film, whereby a fluororesin layer composed mainly of a cured product of the fluororesin (A1) derived from the powder (X2) and a non-fluororesin layer composed mainly of a cured product of the resin (A2) derived from the powder (Y), are layer-separated. In the present invention, the reaction, curing and layer-separation may proceed simultaneously.

In the powder coating material (II), powder particles of the powder (X2) and powder particles of the powder (Y) are separately present, whereby as compared with the powder coating material (I), separation of the non-fluororesin layer and the fluororesin layer tends to more readily take place, whereby a coating film well layer-separated is more likely to be formed. Thus, for example, even in the case of a resin (A2) which has compatibility with the fluororesin (A1) to some extent, layer separation is considered to proceed.

The anti-staining agent (B) may be incorporated in only one of the composition (X2) and the composition (Y), or may be incorporated in both of them. In the case where the anti-staining agent (B) is incorporated in both of the composition (X2) and the composition (Y), the type of the anti-staining agent (B) to be incorporated to the composition (X2) and the composition (Y) may be different.

The anti-staining agent (B) is preferably incorporated in the composition (X2), particularly preferably incorporated in both the composition (X2) and the composition (Y), so that the anti-staining agent (B) readily migrates to the surface of a molten coating film to sufficiently cover the surface of the fluororesin layer in the coating film to provide hydrophilicity within a short period of time during which melting and curing of the powder coating material (II) proceed.

Like the anti-staining agent (B), optional components, such as the pigment (C), the curing agent (D), the curing catalyst (E) and the component (F), may also be incorporated, if they are to be incorporated, to only one of the composition (X2) and the composition (Y), or to both of them. However, depending on the optional components, it may be preferred to be incorporated in both of them or in only one (or primarily one) of them.

For example, in a case where the fluororesin is a fluorinated polymer having reactive groups, and the resin (A2) is a thermosetting resin, it is preferred that the curing agent (D) or the curing catalyst (E) is contained in both the composition (X2) and the composition (Y). In a case where the curing agent (D) is a blocked isocyanate curing agent, the amount is such that the molar ratio of the isocyanate group to the reactive group in each of the composition (X2) and the composition (Y) would be preferably from 0.05 to 1.5, particularly preferably from 0.8 to 1.2. The content of the curing catalyst (E) in each composition is preferably from 0.0001 to 10 parts by mass, per 100 parts by mass in total of the solid contents in the composition other than the pigment (C).

The ultraviolet absorber is preferably incorporated in the composition (X2), and the light stabilizer is preferably incorporated in the composition (Y).

When the composition (X2) contains the ultraviolet absorber, the ultraviolet absorber tends to be readily concentrated in the fluororesin layer. Therefore, the amount of ultraviolet rays passing through the fluororesin layer and reaching the non-fluororesin layer is reduced, whereby deterioration of the non-fluororesin layer is suppressed, and it is possible to avoid a problem that the fluororesin layer is peeled from the non-fluororesin layer.

By incorporating the ultraviolet absorber not only to the composition (X2) but also to the composition (Y), it is possible to let the ultraviolet absorber be concentrated also in the non-fluororesin layer, but, from the viewpoint of suppressing the cost, the ultraviolet absorber should preferably not be present in the non-fluororesin layer as far as possible, i.e. should preferably not be incorporated in the composition (Y).

When the composition (Y) contains a light stabilizer, the light stabilizer will be present in the non-fluororesin layer. Therefore, deterioration of the non-fluororesin layer by ultraviolet rays passing through the fluororesin layer and reaching the non-fluororesin layer will be suppressed, and it is possible to avoid a problem that the fluororesin layer is peeled from the non-fluororesin layer.

The light stabilizer may be incorporated not only in the composition (Y), but also in the composition (X2), but from the viewpoint of suppressing the cost, the light stabilizer should preferably not be present in the fluororesin layer, i.e. should preferably not be incorporated in the composition (X2).

(Process for producing powder coating material (II))

The powder coating material (II) may, for example, be produced by a production process comprising the following step (a1), step (b1), step (c1), step (a2), step (b2), step (c2) and step (d).

> (a1) A step of melt-kneading a mixture of raw material components to obtain a kneaded product composed of the composition (X2).
> (b1) A step of pulverizing the kneaded product composed of the composition (X2) to obtain the powder (X2).
> (c1) As the case requires, a step of classifying the powder (X2).
> (a2) A step of melt-kneading a mixture of raw material components to obtain a kneaded product composed of the composition (Y).
> (b2) A step of pulverizing the kneaded product composed of the composition (Y) to obtain the powder (Y).
> (c2) As the case requires, a step of classifying the powder (Y).
> (d) A step of dry blending the powder (X) and the powder (Y).

<Steps (a1) and (a2)>

After preparing a mixture by mixing the respective components, the mixture is melt-kneaded to obtain a kneaded product in which the respective components are homogenized.

Each component is preferably preliminarily pulverized into a powder form.

The apparatus to be used for mixing may, for example, be a high speed mixer, a V type mixer or an inversion mixer.

The apparatus to be used for melt-kneading may, for example, be a single-screw extruder, a twin-screw extruder or a planetary gear.

The kneaded product is preferably pelletized after cooling.

<Steps (b1) and (b2)>

The apparatus to be used for pulverization, may be a pulverizer such as a pin mill, a hammer mill or a jet mill.

<Steps (c1) and (c2)>

In order to remove a powder having a too large particle size or a powder having a too small particle size, it is preferred to carry out classification after the pulverization. In the classification, it is preferred to remove at least either one of particles having a particle size of less than 10 $\mu$m and particles having a particle size exceeding 100 $\mu$m.

The classification method may, for example, be a method by sieving, and an air classification method.

The average particle size of the powder (X) and the powder (Y) is, for example, preferably from 25 to 50 $\mu$m by a 50% average volume particle size distribution. The measurement of the particle size of a powder is usually carried out by using a particle size measuring apparatus of e.g. a type to capture the potential change during passage through pores, a laser diffraction system, an image judgement system or a sedimentation rate measurement system.

<Step (d)>

The apparatus to be used for dry blending may, for example, be a high-speed mixer, a double cone mixer, a kneader, a tumbler mixer, a mixing shaker, a drum shaker or a rocking shaker.

The mixing ratio of the powder (X) to the powder (Y) (Powder (X)/Powder (Y)) is preferably from 10/90 to 90/10 (mass ratio), more preferably from 20/80 to 80/20 (mass ratio), particularly preferably from 25/75 to 75/25 (mass ratio). When the proportion of the powder (X) is at least the above lower limit value, the weather resistance of the coating film will be excellent. When the proportion of the powder (Y) is at least the above lower limit value, it is possible to reduce the cost of the coating film.

(Mechanism of action)

By the powder coating material (II) wherein the resin (A2) is a resin which can be layer separated as having a low compatibility with the fluororesin (A1), it is possible, like the powder coating material (I), to form, by one coating, a coating film wherein a fluororesin layer composed mainly of the fluororesin (A1) and a non-fluororesin layer are layer-separated. The non-fluororesin layer is disposed on the substrate side, and the fluororesin layer is disposed on the air side, whereby the coating film is excellent in acid resistance and weather resistance.

Further, the powder coating material (II) as described above, contains, like the powder coating material (I), the anti-staining agent (B), whereby it is possible to form a coating film excellent in stain resistance. That is, the anti-staining agent (B) readily migrates to the surface of the molten coating film to sufficiently cover the surface of the fluororesin layer in the coating film to let the surface the fluororesin layer in the coating film be hydrophilized, in a short period of time during which melting and curing of the powder coating material (II) proceed.

[Coated article]

The coated article of the present invention has, on the surface of a substrate, a coating film formed from the powder coating material (I) or the powder coating material (II) (hereinafter, the powder coating material (I) and the powder coating material (II) will be collectively referred to as the powder coating material).

(Substrate)

The material for the substrate is preferably a metal such as aluminum, iron or magnesium, and aluminum is particularly preferred from the viewpoint of excellent corrosion resistance, light in weight, and having an excellent performance in building material applications.

The shape, and size of the substrate are not particularly limited.

(Coating film)

The water contact angle of the coating film is preferably from 1 to 55°, particularly preferably from 3 to 50°. When the water contact angle of the coating film is at least the above lower limit value, the coating film will be scarcely eroded by an organic acid component derived from bird dropping or carcasses of insects, and emergence of mold on the coating film surface can be suppressed (emergence of mold leads to poor appearance). When the water contact angle of the coating film is at most the above upper limit value, the stain resistance will be excellent.

(Process for producing coated article)

The coated article of the present invention can be produced by a production process having the following step (e) and step (f).

(e) A step of applying the powder coating material on a substrate to form a coating film made of a melt of the powder coating material.
(f) A step of curing or solidifying the coating film made of the melt to form a solid coating film.

<Step (e)>

The powder coating is applied on a substrate to form a coating film made of a melt of the powder coating material on the substrate. In a coating film obtainable by using, as a resin (A), a resin having a low compatibility with the fluororesin (A1), an upper layer composed mainly of the melt of the fluororesin (A1) and a lower layer composed mainly of the resin (A2) or the melt of the resin (A2) will be layer-separated, so that a coating film of a double-layered structure will be obtained.

The coating film made of the melt of the powder coating material may be formed at the same time as the application of the powder coating material to the substrate, or may be formed by depositing a powder of the powder coating material on the substrate, followed by heating and melting the powder on the substrate.

In a case where the fluororesin (A1) or the resin (A2) is a reactive resin, the curing reaction of the reactive components in the composition is initiated substantially at the same time as the powder coating material is heated and melted, and therefore, it is necessary to carry out the deposition, and the heating and melting, of the powder coating material, substantially at the same time, or to carry out the deposition of the powder coating material on the substrate, followed by heating and melting of the powder coating material.

The heating temperature to heat and melt the powder coating material (hereinafter referred to also as the "baking temperature"), and the heating retention time to maintain the molten state for a predetermined period of time (hereinafter referred to also as the "baking time") are appropriately set depending upon the types and composition of the raw material components of the powder coating material, and the desired thickness of the coating film. Particularly, the baking temperature is preferably set depending on the reaction temperature of the curing agent (D). For example, in the case of using, as the curing agent (D), a blocked polyisocyanate curing agent, the baking temperature is preferably from 170 to 210°C. The baking time is preferably from 5 to 120 minutes, particularly preferably from 10 to 60 minutes.

The coating method may, for example, be an electrostatic coating method, an electrostatic spraying method, an electrostatic immersion method, a misting method, a fluidized bed dipping method, a blowing method, a spraying method, a thermal spraying method or a plasma spraying method. An electrostatic coating method using a powder coating gun is preferred, in that the coating film will be excellent in surface smoothness even when it is made thin, and further, from the viewpoint of excellent hiding properties of the coating film.

The powder coating gun may be a corona charging type spray gun or a friction charging type spray gun. The corona charging type coating gun is one to spray the powder coating material by corona discharge treatment. The friction charging type coating gun is one to spray the powder coating material by triboelectric charging treatment.

The ejection amount of the powder coating material from the powder coating gun is preferably from 50 to 200 g/min.

The distance from the tip of the gun portion of the powder coating gun to the substrate, is preferably from 150 to 400 mm from the viewpoint of coating efficiency.

In the case of using the corona charge type coating gun, the load voltage to be applied to components constituting the powder coating material by corona discharge treatment is preferably -50 to -100 kV, and from the viewpoint of coating efficiency (the proportion of the powder coating composition deposited on the substrate) and excellent appearance of the coating film, it is preferably from -60 to -80 kV.

In the case of using the friction charging type coating gun, the internally generated current of the powder coating material by triboelectric charging treatment, is preferably from 1 to 8 $\mu$A from the viewpoint of coating efficiency and excellent appearance of the coating film.

In the case of industrial implementation of the electrostatic coating method, for example, a non-coated mirror (substrate) is installed, a grounded conductive horizontal belt conveyor for grounding is set in a coating chamber, and a gun is set at an upper portion in the coating chamber. The coating pattern width is preferably from 50 to 500 mm, the operating speed of the gun is preferably from 1 to 30 m/min, the conveyor speed is preferably from 1 to 50 m/min, and suitable conditions may be selected within the above ranges depending upon the purpose.

As the coating method, a fluidized bed dipping method is preferred from such a viewpoint that it is possible to form a relatively thick coating film.

In the fluidized bed dipping method, it is preferred that in a fluidized bed in which a powder coating material flowing as carried by a gas such as air, is accommodated, a substrate having the surface heated to a temperature of at least the melting temperature of the powder coating material, is dipped to let the powder be deposited and at the same time, be melted, on the surface of the substrate, to form a coating film having a predetermined thickness on the substrate, and then, the coated substrate is taken out from the fluidized bed, and, as a case requires, the molten state of the coating film is maintained for a predetermined time, followed by cooling to cool the coating film in the molten state for curing or solidification, to obtain a substrate having a coating film formed.

In the fluidized bed dipping method, the temperature in the fluidized bed is preferably from 15 to 55°C, and the temperature of the gas such as air blown into the fluidized bed in order to fluidize the powder is also preferably from 15 to 55°C. The temperature of at least the surface to be coated, of the substrate to be dipped in the fluidize bed, is preferably from 300 to 450°C, and the time for dipping the substrate in the fluidized bed is preferably from 1 to 120 seconds. The substrate taken out from the fluidized bed is preferably maintained at a temperature of from 150 to 250°C for from 1 to 5 minutes.

<Step (f)>

The coating film in a molten state is cooled to room temperature (20 to 25°C) and cured or solidified to form a coating film.

The cooling after the baking may be either rapid cooling or slow cooling, but slow cooling is preferred in that interfacial peeling due to the difference in cure shrinkage of the fluororesin layer and the non-fluororesin layer is less likely to occur.

The thickness of the coating film is not particularly limited, but is preferably from 100 to 1,000 $\mu$m. In an application where the demand for weather resistance is high, such as an outdoor unit for air conditioning, as installed along the coast, a traffic signal pole, and a sign board, from 100 to 200 $\mu$m is preferred. Further, as mentioned above, in a case where the thickness is thick, such can be achieved by selecting the fluidized bed dipping method.

EXAMPLES

Now, the present invention will be described in detail with reference to Examples and Comparative Examples. However, it should be understood that the present invention is by no means limited thereto.

Ex. 4 to 7 are Examples of the present invention, Ex. 1 to 3 and 21 to 23 are Reference Examples, and Ex. 8 to 11 and 24 are Comparative Examples.

[Measuring methods, evaluation methods]

(Glass transition temperature)

The glass transition temperature is the intermediate point glass transition temperature measured by a differential scanning calorimetry (DSC) method.

(Molecular weight)

The number average molecular weight and the mass average molecular weight are values obtained as calculated as polystyrene by a gel permeation chromatography (GPC) method.

(Average particle size)

The average particle size of a powder is a value obtained from the 50% average volume particle size distribution by measurement by means of a laser diffraction particle size distribution analyzer (manufactured by Sympatec, Helos-Rodos).

(Appearance of cured film)

The state of the surface of a coating film was visually observed and judged by the following standards.

○ (good): The coating film was excellent in surface smoothness, and no surface roughness, cissing or failure in wettability was observed.
× (bad): The cured film was poor in surface smoothness, and surface roughness, cissing or failure in wettability was observed.

(Water contact angle)

The contact angle when a droplet of water was dropped on the coating film in air, was measured by means of a contact angle meter (manufactured by Kyowa Interface Science Co., Ltd., CA-X type). The smaller the contact angle of water, the higher the hydrophilicity.

(Glossiness)

The 60° glossiness of the surface of a coating film was measured by means of a gloss meter (manufactured by Nippon Denshoku Industries Co., Ltd., PG-1M).

(Weather resistance)

<Gloss retention rate>

A coating film-attached aluminum plate was installed outdoor in Naha-city, Okinawa Prefecture, and the gloss of the surface of the coating film immediately before the installation and the 60° glossiness of the surface of the coating film after two years, were measured by means of a gloss meter (manufactured by Nippon Denshoku Industries Co., Ltd., PG-1M). When the value of the glossiness immediately before the installation is set to be 100%, the percentage of the value of the glossiness after the two years is calculated as a gloss retention (unit: %), and the weather resistance was judged according to the following standards. Here, the gloss retention was measured and calculated in accordance with JIS K 5600-1-7.

○ (good): The gloss retention was at least 80%, and no discoloration of the coating film was observed.
× (bad): The gloss retention was less than 80%, and discoloration of the coating film was observed.

<Staining of coating film>

With respect to the coating film after 2 years, used for evaluation of the gloss retention rate, the staining degree of the surface was visually observed and evaluated by the following standards.

O (good): No distinct staining was observed on the surface of the coating film.
× (bad): Staining was observed over the entire surface of the coating film.

(Acid resistance)

Ten droplets of a10% aqueous hydrochloric acid solution were placed on a coating film and covered with a watch glass and left to stand for one week. It was washed with ion-exchanged water and dried, whereupon the state of the coating film was visually observed and evaluated by the following standards.

○ (good): No swelling or disappearance of the coating film was observed (there was no corrosion of the substrate).
× (bad): Swelling or disappearance of the coating film was observed (the substrate was corroded).

[Production Example 1]

(Production of fluororesin (A1-1))

Into a stainless steel autoclave having an inner volume of 250 mL and equipped with a stirrer, 51.2 g of CHVE, 13.3 g of 4-hydroxybutyl vinyl ether, 55.8 g of xylene, 15.7 g of ethanol, 1.1 g of potassium carbonate, 0.7 g of a 50 mass% xylene solution of tert-butyl peroxypivalate and 63 g of CTFE, were introduced. The temperature was gradually raised, and after reaching 55°C, was held for 20 hours. It was raised to 65°C and kept for 5 hours. After cooling, the residue was removed by filtration to obtain 119.9 g of a fluororesin (A1-1) as a hydroxy group-containing fluorinated polymer (A11). The glass transition temperature of the fluororesin (A1-1) was 54°C, the number average molecular weight was 12,000, and the hydroxy value was 51.3 mgKOH/g.

[Production Example 2]

(Production of fluororesin (A1-2))

Into a four-necked flask having an inner volume of 2L and equipped with a thermometer, a reflux condenser and a stirrer, 1,000 g of a xylene solution of a fluororesin (A1-1) obtained in Ex. 1 (solid content: 50 mass%) and 1.37 g of succinic anhydride were introduced. An addition reaction of succinic anhydride to hydroxy groups of the fluororesin (A1-1) was carried out at 60°C for 5 hours. After removal of xylene for 24 hours in a vacuum drier, the obtained solid was pulverized by an impact hammer mill. A powdery fluororesin (A1-2) was obtained, which is a carboxy group-containing fluorinated polymer (A12) having 3 mol% of carboxy groups introduced to 100 mol% of hydroxy groups in the fluororesin (A1-1). The glass transition temperature of the fluororesin (A1-2) was 55°C, and the number average molecular weight was 15,000.

[Production Example 3]

(Production of resin (A2-2))

Into a four-necked flask having an inner volume of 1L and equipped with a condenser and a thermometer, 200 mL of deionized water, 2 g of a reactive emulsifier (manufactured by Sanyo Chemical Industries, Ltd., ELEMINOL (registered trademark) JS-2, succinate derivative) and 2 g of polyoxyethylene nonylphenyl ether (ethylene oxide 10 mol adduct) were introduced. When the temperature reached 80°C in a warm bath under a nitrogen stream, 20 mL of a 2 mass% aqueous solution of ammonium persulfate was added. A mixture of 140.2 g of methyl methacrylate, 80.0 g of ethyl methacrylate and 0.2 g of n-lauryl mercaptan as a chain transfer agent, was dropwise added over a period of 1 hour. Immediately thereafter, 2 mL of a 2 mass% aqueous solution of ammonium persulfate was added to initiate the reaction. After 3 hours, the temperature in the flask was raised to 85°C and maintained for 1 hour, followed by filtration through a 300-mesh metal gauze to obtain a blue-white aqueous dispersion. The aqueous dispersion was freeze coagulated at -25°C, and after dehydration washing, vacuum dried at 80°C, to obtain 209.2 g of a resin (A2-2) as a white powdery acrylic resin. The glass transition temperature of the resin (A2-2) was 56.6°C, the mass average molecular weight was 92,000, and the number average molecular weight was 43,000.

[Components used in the preparation of powder coating material and composition for powder coating material]

Fluororesin (A1-3): PVDF (manufactured by SHENZHOU NEWMATERIAL Inc. (Dongyue, Inc.), PVDF DS203, mass average molecular weight: 270,000, number average molecular weight: 160,000, melting point: 170°C).
Resin (A2-1): A polyester resin (manufactured by DAICEL-ALLNEX LTD., CRYLCOAT (R) 4890-0, mass average molecular weight: 4,400, number average molecular weight: 2,500, hydroxy value: 30 mgKOH/g).
Fluorinated surfactant (B1-1): A nonionic fluorinated surfactant (manufactured by AGC Seimi Chemical Co., Ltd., Surflon (registered trademark) S-243).
Salt (B2-1): Sodium di-2-ethylhexyl sulfosuccinate (manufactured by NOF Corporation, RAPISOL (registered trademark) A-80).
Salt (B2-2): Sodium alkylbenzenesulfonate (manufactured by HUNTSMAN, NANSA (registered trademark) HS90/S).
Organic silicate compound: methyl silicate oligomer (manufactured by Mitsubishi Chemical Corporation, MKC (registered trademark) silicate MS56S).
Pigment (C-1): Titanium oxide (manufactured by DuPont, Ti-Pure (registered trademark) R960, titanium oxide content: 89 mass%).
Curing agent (D-1): A blocked isocyanate curing agent (manufactured by Evonik, VESTAGON (registered trademark) B1530).
Curing catalyst (E-1): Xylene solution of dibutyltin dilaurate (10,000-fold dilution product).
Ultraviolet absorber (F-1): An organic ultraviolet absorber (manufactured by BASF, Tinuvin (registered trademark) 405, molecular weight: 583.8, melting point: 76.3°C, volatilization temperature: 348.5°C).
Degassing agent (F-2): benzoin.
Surface adjusting agent (F-3): A leveling agent for powder coating material (manufactured by BYK-Chemie, BYK (registered trademark) -360P).

[Ex. 1 to11]

The respective components listed in Table 1 or Table 2 were mixed for about 10 to 30 minutes by means of a high speed mixer (manufactured by Yusaki Co., Ltd.) to obtain a powdery mixture. The mixture was melt-kneaded by means of a biaxial extruder (manufactured by Thermo Prism Ltd., 16 mm extruder) at a barrel temperature setting of 120°C, to obtain pellets composed of a composition for a powder coating material. The composition for a powder coating material prepared in each of Ex. 1 to 7 corresponds to the composition (X1). Then, the obtained pellets were pulverized by means of a pulverizer (manufactured by FRITSCH, rotor speed mill P14) at room temperature, followed by classification by a 150 mesh sieve, to obtain each of the powders (1) to (11), having an average particle size of about 40 μm.
Using the obtained powder as a powder coating material, on one surface of an aluminum plate subjected to chromate treatment, electrostatic coating was applied by an electrostatic coating machine (manufactured by Onoda Cement Corporation, GX3600C) and maintained in an atmosphere of 200°C for 20 minutes. The coated object was left to cool to room temperature to obtain a coating film-attached aluminum plate with a coating thickness of from 55 to 65 μm. The obtained coating film-attached aluminum plate was used as a test piece and evaluated. The results are shown in Table 1 and Table 2.

[Table 1]

| Ex. | | | 1 | 2 | 3 | 4 | 5 | 6 |
|---|---|---|---|---|---|---|---|---|
| Amount (g) | Fluororesin (A1) | (A1-1) | 52.0 | - | 52.0 | 52.0 | 50.0 | 16.7 |
| | | (A1-2) | - | 52.0 | - | - | - | - |
| | | (A1-3) | - | - | - | - | - | - |
| | Resin (A2) | (A2-1) | - | - | - | - | - | 38.9 |
| | | (A2-2) | - | - | - | - | - | - |
| | Anti-staining agent | (B1-1) | 6.0 | 6.0 | 3.0 | - | - | - |
| | | (B2-1) | - | - | - | 6.0 | - | - |
| | | (B2-2) | - | - | - | - | 6.0 | 6.0 |
| | | MS56S | - | - | - | - | - | - |
| | Pigment (C-1) | | 35.0 | 35.0 | 35.0 | 35.0 | 35.0 | 35.0 |
| | Curing agent (D-1) | | 13.0 | 13.0 | 13.0 | 13.0 | 13.0 | 9.5 |
| | Curing catalyst (E-1) | | 0.0063 | 0.0063 | 0.0063 | 0.0063 | 0.0063 | 0.0063 |
| | Other components (F) | (F-1) | 0.1 | 0.1 | 0.1 | 0.1 | 0.1 | 0.1 |
| | | (F-2) | 0.4 | 0.4 | 0.4 | 0.4 | 0.4 | 0.4 |
| | | (F-3) | 1.0 | 1.0 | 1.0 | 1.0 | 1.0 | 1.0 |
| Type of powder | | | (1) | (2) | (3) | (4) | (5) | (6) |
| Evaluation of coating film | Appearance | | ○ | ○ | ○ | ○ | ○ | ○ |
| | Water contact angle | | 10.9 | 12.1 | 25.6 | 41.3 | 36.7 | 42.3 |
| | 60° glossiness (%) | | 81.3 | 79.9 | 80.9 | 80.4 | 80.1 | 80.7 |
| | Weather resistance | Gloss retention | ○ | ○ | ○ | ○ | ○ | ○ |
| | | Staining of coating film | ○ | ○ | ○ | ○ | ○ | ○ |
| | Acid resistance | | ○ | ○ | ○ | ○ | ○ | ○ |

[Table 2]

| Ex. | | | 7 | 8 | 9 | 10 | 11 |
|---|---|---|---|---|---|---|---|
| Amount (g) | Fluororesin (A1) | (A1-1) | - | 50.0 | 52.0 | - | - |
| | | (A1-2) | - | - | - | - | - |
| | | (A1-3) | 45.5 | - | - | - | - |
| | Resin (A2) | (A2-1) | - | - | - | 52.0 | 52.0 |
| | | (A2-2) | 19.3 | - | - | - | - |
| | Anti-staining agent | (B1-1) | - | - | - | 3.0 | - |
| | | (B2-1) | - | - | - | - | - |
| | | (B2-2) | 6.0 | - | - | - | - |
| | | MS56S | - | 6.0 | - | - | - |
| | Pigment (C-1) | | 35.0 | 35.0 | 35.0 | 32.1 | 32.1 |
| | Curing agent (D-1) | | - | 13.0 | 13.0 | 7.6 | 7.6 |
| | Curing catalyst (E-1) | | - | 0.0063 | 0.0063 | 0.0050 | 0.0050 |
| | Other components (F) | (F-1) | 0.1 | 0.1 | 0.1 | 0.1 | 0.1 |
| | | (F-2) | 0.4 | 0.4 | 0.4 | 0.4 | 0.4 |
| | | (F-3) | 1.0 | 1.0 | 1.0 | 1.0 | 1.0 |
| Type of powder | | | (7) | (8) | (9) | (10) | (11) |
| Evaluation of coating film | Appearance | | ○ | × | ○ | ○ | ○ |
| | Water contact angle | | 41.1 | 58.0 | 87.2 | 17.1 | 77.1 |
| | 60° glossiness (%) | | 30.5 | 45.2 | 78.9 | 95.1 | 93.5 |
| | Weather resistance | Gloss retention | ○ | ○ | ○ | ○ | ○ |
| | | Staining of coating film | ○ | × | × | ○ | × |
| | Acid resistance | | ○ | ○ | ○ | × | × |

[Ex. 21 to 24]

The respective powders listed in Table 3, each 500 g, were dry-blended at room temperature for one minute by means of a high-speed mixer (manufactured by EARTHTECHNICA CO., LTD., capacity: 2L) under the conditions at 500 revolutions per minute of the agitator blade and at 4,000 revolutions per minute of the chopper wing, to produce a powder coating material.

Using the obtained powder coating material, on one surface of an aluminum plate subjected to chromate treatment, electrostatic coating was applied by an electrostatic coating machine (manufactured by Onoda Cement Corporation, GX3600C) and maintained in an atmosphere of 200°C for 20 minutes. The coated object was left to cool to room temperature to obtain a coating film-attached aluminum plate with a coating thickness of from 55 to 65 $\mu$m. The obtained coating film-attached aluminum plate was used as a test piece and evaluated. The results are shown in Table 3.

[Table 3]

| Ex. | 21 | 22 | 23 | 24 |
|---|---|---|---|---|
| Type of powder | (1) | (1) | (9) | (9) |
| | (10) | (11) | (10) | (11) |

(continued)

| Ex. | | | 21 | 22 | 23 | 24 |
|---|---|---|---|---|---|---|
| Evaluation of coating film | Appearance | | ○ | ○ | ○ | ○ |
| | Water contact angle | | 11.3 | 41.3 | 30.2 | 80.9 |
| | 60° glossiness (%) | | 83.2 | 82.1 | 81.4 | 81.5 |
| | Weather resistance | Gloss retention | ○ | ○ | ○ | ○ |
| | | Staining of coating film | ○ | ○ | ○ | × |
| | Acid resistance | | ○ | ○ | ○ | ○ |

The coating films formed from the powder coating materials in Ex. 1 to 7 were excellent in appearance, low in their water contact angles, and excellent in weather resistance and acid resistance. When Ex. 1 and Ex. 4 are compared, in the case where the same mass of the fluorinated surfactant (B1) or the salt (B2) was used, the water contact angle in Ex. 1 wherein the fluorinated surfactant (B1) was used, was lower. The coating films formed from the powder coating materials in Ex. 1 to 6 were excellent also in glossiness.

In contrast, in Ex. 9 and 11 wherein no anti-staining agent (B) was contained, the water contact angle of the coating film was high, and in the weather resistance test, staining was observed over the entire coating film. Also in Ex. 8 wherein an organic silicate compound was used in place of the fluorinated surfactant (B1) or the salt (B2), the water contact angle of the coating film was high, and in the weather resistance test, staining was observed over the entire coating film. The coating films formed from the powder coating materials in Ex. 10 and 11 wherein no fluororesin (A1) was contained, were inferior in acid resistance.

The coating film formed from the powder coating material in each of Ex. 21 to 23 using a powder (Ex. 1, Ex. 10) containing the fluorinated surfactant (B1) or the salt (B2), was excellent in appearance, low in water contact angle, and excellent in glossiness, weather resistance and acid resistance.

In contrast, the coating film formed from the powder coating material in Ex. 24 using only a powder containing no fluorinated surfactant (B1) or no salt (B2), was inferior in that the water contact angle was high, and in the weather resistance test staining was observed over the entire coating film.

The powder coating material of the present invention is useful for forming a coating film on a surface of e.g. a traffic signal, a telephone pole, a road sign pole, a bridge, a railing, a building material (gate, fence, siding material for a house, curtain wall, and roof), a car body or parts (bumper, and wiper blade), a household appliance (outdoor unit of air conditioner, and exterior of water heater), a blade for wind power generation, a solar cell back sheet, a back surface of a heat collection mirror for solar power generation, and an eggplant battery exterior.

**Claims**

1. A powder coating material composed of a powder of a composition comprising a fluororesin and at least one anti-staining agent selected from the following salt:
   a sodium dialkyl sulfosuccinate or a sodium alkyl benzene sulfonate.

2. The powder coating material according to Claim 1, wherein the composition further contains a resin other than the fluororesin.

3. A powder coating material which is a powder mixture comprising a first powder composed of a first composition containing the fluororesin, and a second powder composed of a second composition containing a resin other than the fluororesin and not containing the fluororesin, wherein at least one of the first composition and the second composition contains at least one anti-staining agent selected from the following salt:
   a sodium dialkyl sulfosuccinate or a sodium alkyl benzene sulfonate.

4. The powder coating material according to Claim 2 or 3, wherein the content of the resin other than the fluororesin is from 10 to 90 parts by mass, per 100 parts by mass of the total of the fluororesin and the resin other than the fluororesin.

5. The powder coating material according to any one of Claims 2 to 4, wherein the resin other than the fluororesin is a curable acrylic resin, a curable polyester resin, a curable urethane resin, a curable epoxy resin or a curable silicone resin.

6. The powder coating material according to any one of Claims 2 to 5, wherein the resin other than the fluororesin is a curable polyester resin having at least one type of reactive groups selected from hydroxy groups and carboxy groups.

7. The powder coating material according to any one of Claims 2 to 6, wherein the ratio (Mw/Mn) of the mass average molecular weight (Mw) to the number average molecular weight (Mn), of the resin other than the fluororesin is within a range of from 1.0 to 3.0, Mn and Mw being obtained as calculated as polystyrene by a gel permeation chromatography (GPC) method.

8. The powder coating material according to any one of Claims 1 to 7, wherein the fluororesin is a hydroxy group-containing fluorinated polymer or a carboxy group-containing fluorinated polymer.

9. The powder coating material according to any one of Claims 5 to 8, which further contains a curing agent.

10. The powder coating material according to any one of Claims 2 to 4, wherein the fluororesin is a polyvinylidene fluoride, and the resin other than the fluororesin is an acrylic resin.

11. The powder coating material according to Claim 10, wherein the ratio (Mw/Mn) of the mass average molecular weight (Mw) to the number average molecular weight (Mn), of the acrylic resin is within a range of from 1.0 to 3.0, Mn and Mw being obtained as calculated as polystyrene by a gel permeation chromatography (GPC) method.

12. The powder coating material according to any one of Claims 1 to 11, wherein the content of the anti-staining agent is from 0.01 to 15 parts by mass, per 100 parts by mass of the resin components contained in the powder coating material.

13. A coated article having, on the surface of a substrate, a coating film formed from the powder coating material as defined in any one of Claims 1 to 12.

14. The coated article according to Claim 13, wherein the water contact angle of the coating film is from 1 to 55°, wherein the contact angle when a droplet of water was dropped on the coating film in air, was measured by means of a contact angle meter (manufactured by Kyowa Interface Science Co., Ltd., CA-X type).

15. The coated article according to Claim 13 or 14, wherein the material for the substrate is aluminum.

**Patentansprüche**

1. Pulverbeschichtungsmaterial, gebildet aus einem Pulver einer Zusammensetzung, umfassend ein Fluorharz und mindestens ein Antiverfärbungsmittel, ausgewählt aus dem nachstehenden Salz:
ein Natriumdialkylsulfosuccinat oder ein Natriumalkylbenzolsulfonat.

2. Pulverbeschichtungsmaterial nach Anspruch 1, wobei die Zusammensetzung weiter ein Harz, das von dem Fluorharz verschieden ist, enthält.

3. Pulverbeschichtungsmaterial, das ein Pulvergemisch ist, umfassend ein erstes Pulver, das aus einer ersten Zusammensetzung gebildet ist, die das Fluorharz enthält, und ein zweites Pulver, das aus einer zweiten Zusammensetzung gebildet ist, die ein Harz enthält, das von dem Fluorharz verschieden ist, und das Fluorharz nicht enthält, wobei mindestens eine von der ersten Zusammensetzung und der zweiten Zusammensetzung mindestens ein Antiverfärbungsmittel enthält, ausgewählt aus dem nachstehenden Salz:
ein Natriumdialkylsulfosuccinat oder ein Natriumalkylbenzolsulfonat.

4. Pulverbeschichtungsmaterial nach Anspruch 2 oder 3, wobei der Gehalt des Harzes, das von dem Fluorharz verschieden ist, von 10 bis 90 Massenteile pro 100 Massenteile der Summe des Fluorharzes und des Harzes, das von dem Fluorharz verschieden ist, beträgt.

5. Pulverbeschichtungsmaterial nach einem der Ansprüche 2 bis 4, wobei das Harz, das von dem Fluorharz verschieden ist, ein härtbares Acrylharz, ein härtbares Polyesterharz, ein härtbares Urethanharz, ein härtbares Epoxidharz oder ein härtbares Silikonharz ist.

6. Pulverbeschichtungsmaterial nach einem der Ansprüche 2 bis 5, wobei das Harz, das von dem Fluorharz verschieden ist, ein härtbares Polyesterharz mit mindestens einer Art von reaktiven Gruppen, ausgewählt aus Hydroxylgruppen und Carboxylgruppen, ist.

7. Pulverbeschichtungsmaterial nach einem der Ansprüche 2 bis 6, wobei das Verhältnis (Mw/Mn) des massengemittelten Molekulargewichts (Mw) zu dem zahlengemittelten Molekulargewicht (Mn) des Harzes, das von dem Fluorharz verschieden ist, in einem Bereich von 1,0 bis 3,0 liegt, wobei Mn und Mw, als Polystyrol berechnet, mit einem Gelpermeationschromatographieverfahren (GPC) erhalten werden.

8. Pulverbeschichtungsmaterial nach einem der Ansprüche 1 bis 7, wobei das Fluorharz ein Hydroxylgruppen-enthaltendes fluoriertes Polymer oder ein Carboxylgruppen-enthaltendes fluoriertes Polymer ist.

9. Pulverbeschichtungsmaterial nach einem der Ansprüche 5 bis 8, das weiter ein Härtungsmittel enthält.

10. Pulverbeschichtungsmaterial nach einem der Ansprüche 2 bis 4, wobei das Fluorharz ein Polyvinylidenfluorid ist und das Harz, das von dem Fluorharz verschieden ist, ein Acrylharz ist.

11. Pulverbeschichtungsmaterial nach Anspruch 10, wobei das Verhältnis (Mw/Mn) des massengemittelten Molekulargewichts (Mw) zu dem zahlengemittelten Molekulargewicht (Mn) des Acrylharzes in einem Bereich von 1,0 bis 3,0 liegt, wobei Mn und Mw, als Polystyrol berechnet, mit einem Gelpermeationschromatographieverfahren (GPC) erhalten werden.

12. Pulverbeschichtungsmaterial nach einem der Ansprüche 1 bis 11, wobei der Gehalt des Antiverfärbungsmittels von 0,01 bis 15 Massenteile pro 100 Massenteile der Harzbestandteile, die in dem Pulverbeschichtungsmaterial enthalten sind, beträgt.

13. Beschichteter Gegenstand, der auf der Oberfläche eines Substrats einen Beschichtungsfilm aufweist, der aus dem Pulverbeschichtungsmaterial, wie in einem der Ansprüche 1 bis 12 definiert, gebildet ist.

14. Beschichteter Gegenstand nach Anspruch 13, wobei der Wasserkontaktwinkel des Beschichtungsfilms von 1 bis 55° beträgt, wobei der Kontaktwinkel, wenn ein Tropfen Wasser auf den Beschichtungsfilm in Luft getropft wurde, mit einem Kontaktwinkelmeter (hergestellt von Kyowa Interface Science Co., Ltd., CA-X Typ) gemessen wurde.

15. Beschichteter Gegenstand nach Anspruch 13 oder 14, wobei das Material für das Substrat Aluminium ist.


**Revendications**

1. Matériau de revêtement pulvérulent composé d'une poudre d'une composition comprenant une fluororésine et au moins un agent antisalissure sélectionné parmi le sel suivant :
un sulfosuccinate de dialkyle de sodium ou un sulfonate d'alkyle-benzène de sodium.

2. Matériau de revêtement pulvérulent selon la revendication 1, dans lequel la composition contient en outre une résine autre que la fluororésine.

3. Matériau de revêtement pulvérulent qui est un mélange pulvérulent comprenant une première poudre composée d'une première composition contenant la fluororésine, et d'une deuxième poudre composée d'une deuxième composition contenant une résine autre que la fluororésine et ne contenant pas la fluororésine, dans lequel au moins l'une de la première composition et de la deuxième composition contient au moins un agent antisalissure sélectionné parmi le sel suivant :
un sulfosuccinate de dialkyle de sodium ou un sulfonate d'alkyle-benzène de sodium.

4. Matériau de revêtement pulvérulent selon la revendication 2 ou 3, dans lequel la teneur en résine autre que la fluororésine va de 10 à 90 parties en masse, pour 100 parties en masse du total de la fluororésine et de la résine autre que la fluororésine.

**5.** Matériau de revêtement pulvérulent selon l'une quelconque des revendications 2 à 4, dans lequel la résine autre que la fluororésine est une résine acrylique durcissable, une résine de polyester durcissable, une résine d'uréthane durcissable, une résine époxy durcissable ou une résine de silicone durcissable.

**6.** Matériau de revêtement pulvérulent selon l'une quelconque des revendications 2 à 5, dans lequel la résine autre que la fluororésine est une résine de polyester durcissable ayant au moins un type de groupes réactifs sélectionné parmi des groupes hydroxy et des groupes carboxy.

**7.** Matériau de revêtement pulvérulent selon l'une quelconque des revendications 2 à 6, dans lequel le rapport (Mw/Mn) entre le poids moléculaire moyen en masse (Mw) et le poids moléculaire moyen en nombre (Mn), de la résine autre que la fluororésine se situe dans une plage allant de 1,0 à 3,0, Mn et Mw étant obtenus tels que calculés par une technique de chromatographie par perméation sur gel (GPC).

**8.** Matériau de revêtement pulvérulent selon l'une quelconque des revendications 1 à 7, dans lequel la fluororésine est un polymère fluoré contenant un groupe hydroxy ou un polymère fluoré contenant un groupe carboxy.

**9.** Matériau de revêtement pulvérulent selon l'une quelconque des revendications 5 à 8, qui contient en outre un agent durcissant.

**10.** Matériau de revêtement pulvérulent selon l'une quelconque des revendications 2 à 4, dans lequel la fluororésine est du poly(fluorure de vinylidène), et la résine autre que la fluororésine est une résine acrylique.

**11.** Matériau de revêtement pulvérulent selon la revendication 10, dans lequel le rapport(Mw/Mn) entre le poids moléculaire moyen en masse (Mw) et le poids moléculaire moyen en nombre (Mn), de la résine acrylique se situe dans une plage allant de 1,0 à 3,0, Mn et Mw étant obtenus tels que calculés par une technique de chromatographie par perméation sur gel (GPC).

**12.** Matériau de revêtement pulvérulent selon l'une quelconque des revendications 1 à 11, dans lequel la teneur en agent antisalissure va de 0,01 à 15 parties en masse, pour 100 parties en masse des constituants de résine contenus dans le matériau de revêtement pulvérulent.

**13.** Article revêtu ayant, sur la surface d'un substrat, un film de revêtement formé à partir du matériau de revêtement pulvérulent selon l'une quelconque des revendications 1 à 12.

**14.** Article revêtu selon la revendication 13, dans lequel l'angle de contact avec l'eau du film de revêtement va de 1 à 55°, dans lequel l'angle de contact lorsqu'une gouttelette d'eau chute sur le film de revêtement dans l'air, a été mesuré au moyen d'un dispositif de mesure d'angle de contact (fabriqué par Kyowa Interface Science Co., Ltd., du type CA-X).

**15.** Article revêtu selon la revendication 13 ou 14, dans lequel le matériau pour le substrat est l'aluminium.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2010221113 A
- JP 2012040503 A
- WO 2012048650 A
- JP 2002294170 A
- JP 2005126512 A
- JP 2005126513 A
- JP 2005272499 A
- JP 2008266361 A
- JP 2871948 B